# EUROPEAN PATENT APPLICATION

(11) **EP 4 797 052 A1**
(43) Date of publication of application: **26.08.2026**
(21) Application number: 24894388.8
(22) Date of filing: 22.10.2024
(51) Int. Cl.: G06F 3/01, G02B 27/01, G06F 1/16, G06V 40/18, G06F 3/04845, G06F 3/0346, G06T 19/00

(54) **WEARABLE ELECTRONIC DEVICE FOR DISPLAYING AUGMENTED REALITY IMAGE, OPERATION METHOD THEREOF, AND STORAGE MEDIUM**

(30) Priority: 23.11.2023 KR 20230164137; 14.12.2023 KR 20230181323
(71) Applicant: Samsung Electronics Co., Ltd., Suwon-si, Gyeonggi-do 16677 (KR)
(72) Inventor: SHIN, Eunhye, Suwon-si Gyeonggi-do 16677 (KR); KIM, Jiwon, Suwon-si Gyeonggi-do 16677 (KR); YEO, Jaeyung, Suwon-si Gyeonggi-do 16677 (KR); LEE, Jinwon, Suwon-si Gyeonggi-do 16677 (KR); LEE, Hyunjun, Suwon-si Gyeonggi-do 16677 (KR)
(74) Representative: Gulde & Partner
(86) International application number: PCT/KR2024/016060
(87) International publication number: WO 2025/110493

(57) **Abstract**

Disclosed is a wearable electronic device comprising: memory for storing instructions; and a processor. The instructions may cause the wearable electronic device to: identify a virtual first area, corresponding to a three-dimensional space in which a first image is to be displayed as an augmented reality image, on the basis of a first sensing value, indicating the angle at which the wearable electronic device is inclined, and the gaze of a user, wherein the first area corresponds to the field of vision of the user; identify the resolution of the first image and at least one object included in the first image; identify, on the basis of the at least one object and the resolution, the position at which a first augmented reality image corresponding to the first image is to be displayed in the first area and the size of the first augmented reality image to be displayed at the position, wherein the position is identified on the basis of a first position, based on a first axial direction and a second axial direction orthogonal to each other in the first area, and a second position, based on a third axial direction orthogonal to the first axial direction and the second axial direction in the first area, and the third axial direction is a direction oriented toward the virtual first area and away from the wearable electronic device; and display the first augmented reality image having the size at the position in the virtual first area.

## Description

### [Technical Field]

Embodiments of the disclosure relate to a wearable electronic device for displaying an augmented reality image, a method for operating the same, and a storage medium.

### [Background Art]

Various services and additional functions provided through wearable electronic devices, such as augmented reality (AR) glasses, video see-through (VST) devices, and virtual reality (VR) devices, are gradually increasing. To increase the utility of these electronic devices and satisfy the needs of various users, communication service providers or electronic device manufacturers are competitively developing electronic devices to provide various functions and differentiate themselves from other companies. Accordingly, various functions provided through wearable electronic devices are also becoming increasingly sophisticated.

AR glasses, VST devices, and VR devices may provide a realistic experience to a user by displaying a virtual image while being worn on the user's body. The AR glasses, the VST devices, and the VR devices may replace the usability of smartphones in various fields such as game entertainment, education, and social networking services (SNS). Users may be provided with content similar to reality through the AR glasses, the VST devices, and the VR devices, and feel as if they stay in a virtual world through interaction.

The above information is presented as related art only to assist with an understanding of the disclosure. No determination has been made, and no assertion is made, as to whether any of the above might be applicable as prior art with regard to the disclosure.

### [Detailed Description of the Invention]

### [Technical Solution]

A wearable electronic device according to an embodiment may include a first sensor, a second sensor, memory, a display, and a processor.

The memory according to an embodiment may store instructions that, when executed by the processor individually or collectively, cause the wearable electronic device to obtain, through the first sensor, a first sensing value indicating an angle at which the wearable electronic device is tilted.

The memory according to an embodiment may store instructions that, when executed by the processor individually or collectively, cause the wearable electronic device to identify, through the second sensor, a line of sight of a user wearing the wearable electronic device.

The memory according to an embodiment may store instructions that, when executed by the processor individually or collectively, cause the wearable electronic device to, based on the first sensing value and the line of sight, identify a virtual first region corresponding to a three-dimensional space to display a first image stored in the memory as a first augmented reality image. The virtual first region may correspond to the user's field of view.

The memory according to an embodiment may store instructions that, when executed by the processor individually or collectively, cause the wearable electronic device to identify a resolution of the first image and at least one object included in the first image.

The memory according to an embodiment may store instructions that, when executed by the processor individually or collectively, cause the wearable electronic device to, based on the at least one object and the resolution, identify a position at which the first augmented reality image is to be displayed and a size of the first augmented reality image, in the virtual first region. The position may be identified based on a first position based on a first axis direction and a second axis direction perpendicular to the first axis direction in the virtual first region, and a second position based on a third axis direction perpendicular to the first axis direction and the second axis direction in the virtual first region. The third axis direction may indicate a direction toward the virtual first region and away from the wearable electronic device.

The memory according to an embodiment may store instructions that, when executed by the processor individually or collectively, cause the wearable electronic device to display, through the display, the first augmented reality image of the size at the position in the virtual first region.

A method for operating a wearable electronic device according to an embodiment may include obtaining, through a first sensor of the wearable electronic device, a first sensing value indicating an angle at which the wearable electronic device is tilted.

The method for operating a wearable electronic device according to an embodiment may include identifying, through a second sensor of the wearable electronic device, a line of sight of a user wearing the wearable electronic device.

The method for operating a wearable electronic device according to an embodiment may include, based on the first sensing value and the line of sight, identifying a virtual first region corresponding to a three-dimensional space to display a first image stored in memory of the wearable electronic device as a first augmented reality image. The first region may correspond to the user's field of view.

The method for operating a wearable electronic device according to an embodiment may include identifying a resolution of the first image and at least one object included in the first image.

The method for operating a wearable electronic device according to an embodiment may include, based on the at least one object and the resolution, identifying a position at which the first augmented reality image corresponding to the first image is to be displayed and a size of the first augmented reality image to be displayed at the position, in the virtual first region. The position may be identified based on a first position based on a first axis direction and a second axis direction perpendicular to the first axis direction in the virtual first region, and a second position based on a third axis direction perpendicular to the first axis direction and the second axis direction in the virtual first region. The third axis direction may indicate a direction toward the virtual first region and away from the wearable electronic device.

The method for operating a wearable electronic device according to an embodiment may include displaying, through a display of the wearable electronic device, the first augmented reality image of the size at the position in the virtual first region.

In a computer-readable storage medium storing instructions according to an embodiment, the instructions, when executed by a processor of a wearable electronic device, may cause the wearable electronic device to perform at least one operation, and the at least one operation may include obtaining, through a first sensor of the wearable electronic device, a first sensing value indicating an angle at which the wearable electronic device is tilted.

In the computer-readable storage medium storing instructions according to an embodiment, the instructions, when executed by the processor of the wearable electronic device, may cause the wearable electronic device to perform at least one operation, and the at least one operation may include identifying, through a second sensor of the wearable electronic device, a line of sight of a user wearing the wearable electronic device.

In the computer-readable storage medium storing instructions according to an embodiment, the instructions, when executed by the processor of the wearable electronic device, may cause the wearable electronic device to perform at least one operation, and the at least one operation may include, based on the first sensing value and the line of sight, identifying a virtual first region corresponding to a three-dimensional space to display a first image stored in memory of the wearable electronic device as a first augmented reality image. The first region corresponds to the user's field of view.

In the computer-readable storage medium storing instructions according to an embodiment, the instructions, when executed by the processor of the wearable electronic device, may cause the wearable electronic device to perform at least one operation, and the at least one operation may include identifying a resolution of the first image and at least one object included in the first image.

In the computer-readable storage medium storing instructions according to an embodiment, the instructions, when executed by the processor of the wearable electronic device, may cause the wearable electronic device to perform at least one operation, and the at least one operation may include, based on the at least one object and the resolution, identifying a position at which the first augmented reality image corresponding to the first image is to be displayed and a size of the first augmented reality image to be displayed at the position, in the virtual first region. The position may be identified based on a first position based on a first axis direction and a second axis direction perpendicular to the first axis direction in the virtual first region, and a second position based on a third axis direction perpendicular to the first axis direction and the second axis direction in the virtual first region. The third axis direction may indicate a direction toward the virtual first region and away from the wearable electronic device.

In the computer-readable storage medium storing instructions according to an embodiment, the instructions, when executed by the processor of the wearable electronic device, may cause the wearable electronic device to perform at least one operation, and the at least one operation may include displaying, through a display of the wearable electronic device, the first augmented reality image of the size at the position in the virtual first region.

### [Brief Description of Drawings]

FIG. 1 is a block diagram illustrating an electronic device in a network environment according to various embodiments.
FIG. 2 is a perspective view illustrating an internal configuration of a wearable electronic device according to an embodiment of the disclosure.
FIGS. 3A and 3B are diagrams illustrating front and rear surfaces of a wearable electronic device according to an embodiment.
FIG. 4 is a block diagram illustrating a wearable electronic device according to an embodiment.
FIGS. 5A and 5B are diagrams illustrating a virtual first region according to an embodiment.
FIG. 6 is a flowchart illustrating an operation of displaying an augmented reality image in a virtual first region by a wearable electronic device according to an embodiment.
FIG. 7 is a flowchart illustrating an operation of determining a position and size of a first augmented reality image based on a resolution of a first image by a wearable electronic device according to an embodiment.
FIG. 8A is a flowchart illustrating an operation of determining a position and size of a first augmented reality image by a wearable electronic device, when a first image includes a full-body image of a person, according to an embodiment.
FIG. 8B is a flowchart illustrating an operation of determining a position and size of a first augmented reality image by a wearable electronic device, when a first image includes an upper-body image of a person, according to an embodiment.
FIG. 9 is a flowchart illustrating an operation of determining a position and size of a first augmented reality image by a wearable electronic device, when a first image includes an image captured of the sky according to an embodiment.
FIG. 10 a flowchart illustrating an operation of determining a position and size of a first augmented reality image by a wearable electronic device, when a first image includes text, according to an embodiment.
FIG. 11 is a flowchart illustrating an operation of determining a position and size of a first augmented reality image based on metadata of a first image by a wearable electronic device according to an embodiment.
FIGS. 12A and 12B are diagrams illustrating an operation of determining a position and size of a first augmented reality image based on a resolution of a first image by a wearable electronic device according to an embodiment.
FIG. 13A is a diagram illustrating an operation of determining a position and size of a first augmented reality image based on a height of a person by a wearable electronic device, when a first image includes a full body of the person according to an embodiment.
FIG. 13B is a diagram illustrating an operation of determining a position and size of a first augmented reality image by a wearable electronic device such that a person's face is displayed at an eye height of a user, when a first image includes the person's upper body, according to an embodiment.
FIG. 14A is a diagram illustrating an operation of determining a position and size of a first augmented reality image by a wearable electronic device, when a first image includes an image captured of the sky, according to an embodiment.
FIG. 14B is a diagram illustrating an operation of determining a position and size of a first augmented reality image by a wearable electronic device, when a first image includes an image captured of a landscape, according to an embodiment.
FIG. 15 is a diagram comparing a position and size of a first augmented reality image when a first image is an image captured of a landscape with a position and size of a first augmented reality image when a first image includes a person's upper body, according to an embodiment.
FIG. 16 is a diagram comparing a position and size of a first augmented reality image when a first image is an image captured of a landscape with a position and size of a first augmented reality image when a first image includes text, according to an embodiment.
FIG. 17 is a diagram illustrating an operation of displaying a plurality of augmented reality images corresponding to a plurality of images by a wearable electronic device according to an embodiment.
FIG. 18 is a diagram illustrating an operation of analyzing an object in a first image and displaying a first augmented reality image corresponding to the first image by a wearable electronic device according to an embodiment.

### [Mode for Carrying out the Invention]

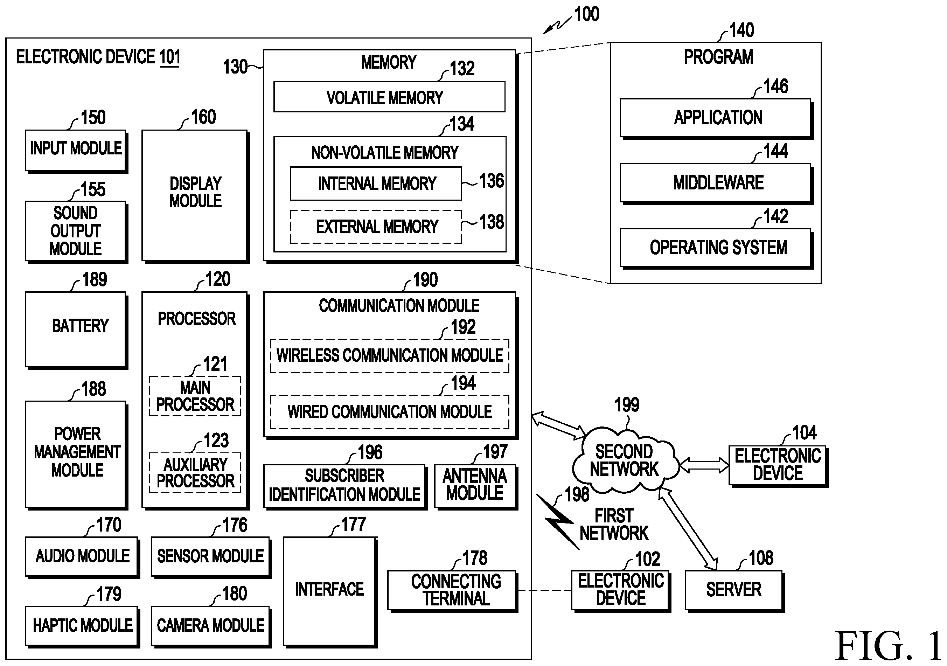

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the strength of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form an mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

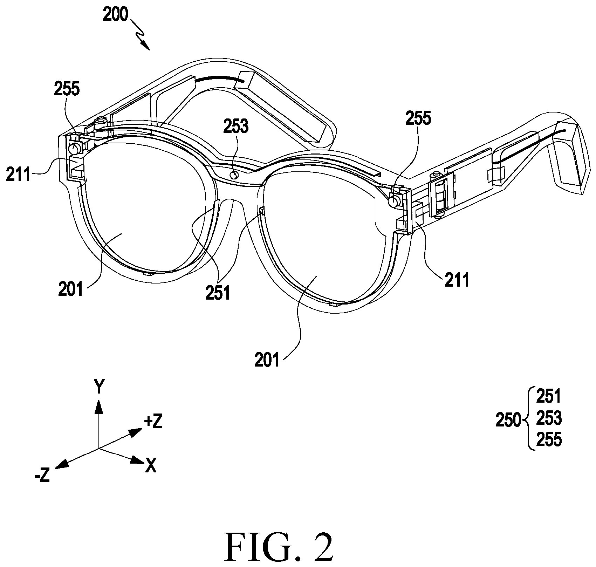

FIG. 2 is a perspective view illustrating an internal configuration of a wearable electronic device according to an embodiment of the disclosure.

Referring to FIG. 2, a wearable electronic device 200 according to an embodiment of the disclosure may include at least one of a light output module 211, a display member 201, or a camera module 250.

According to an embodiment, the light output module 211 may include a light source capable of outputting an image, and a lens that guides the image to the display member 201. According to an embodiment of the disclosure, the light output module 211 may include at least one of a liquid crystal display (LCD), a digital mirror device (DMD), a liquid crystal on silicon (LCoS), an organic light emitting diode (OLED), or a micro LED.

According to an embodiment of the disclosure, the display member 201 may include an optical waveguide (e.g., a waveguide). According to an embodiment of the disclosure, an output image of the light output module 211 incident on one end of the optical waveguide may be propagated through the optical waveguide and provided to a user. According to an embodiment of the disclosure, the optical waveguide may include at least one of at least one diffractive element (e.g., diffractive optical element (DOE) or holographic optical element (HOE)) or reflective element (e.g., a reflective mirror). For example, the optical waveguide may guide the output image of the light output module 211 to the user's eyes using the at least one diffractive element or reflective element.

According to an embodiment of the disclosure, the camera module 250 may capture a still image and/or a video. According to an embodiment, the camera module 250 may be disposed within a lens frame and disposed around the display member 201.

According to an embodiment of the disclosure, a first camera module 251 may capture and/or recognize the trajectory of the user's eyes (e.g., pupils or irises) or gaze. According to an embodiment of the disclosure, the first camera module 251 may periodically or aperiodically transmit information (e.g., trajectory information) related to the trajectory of the user's eyes or gaze to a processor (e.g., the processor 120 of FIG. 1).

According to an embodiment of the disclosure, a second camera module 253 may capture an external image.

According to an embodiment of the disclosure, a third camera module 255 may be used for hand detection and tracking, and user gesture (e.g., hand action) recognition. The third camera module 255 according to an embodiment of the disclosure may be used for 3 degrees of freedom (3DoF) or 6DoF head tracking, location (space or environment) recognition, and/or movement recognition. The second camera module 253 may also be used for hand detection and tracking, and user gesture recognition according to an embodiment of the disclosure. According to an embodiment of the disclosure, at least one of the first camera module 251 to the third camera module 255 may be replaced with a sensor module (e.g., a LiDAR sensor). For example, the sensor module may include at least one of a vertical cavity surface emitting laser (VCSEL), an IR sensor, and/or a photodiode.

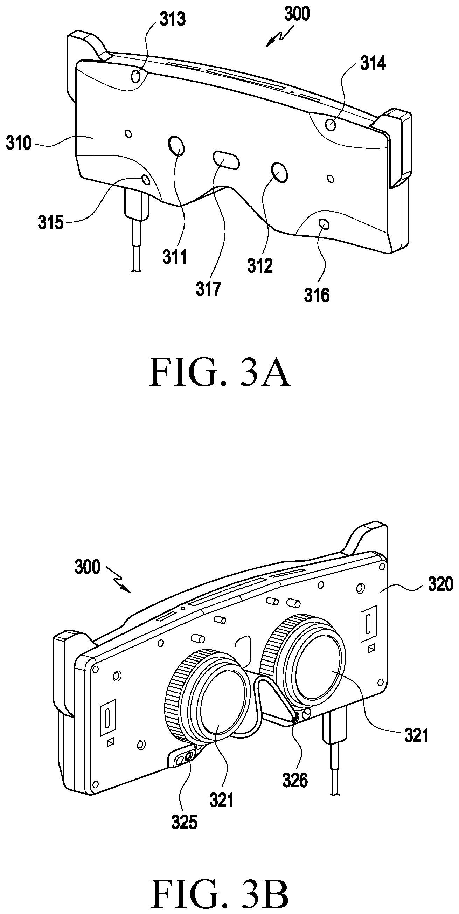

FIGS. 3A and 3B are diagrams illustrating the front and rear surfaces of a wearable electronic device according to an embodiment.

Referring to FIGS. 3A and 3B, in an embodiment, camera modules 311, 312, 313, 314, 315, and 316 and/or a depth sensor 317 may be disposed on a first surface 310 of a housing to obtain information related to a surrounding environment of a wearable electronic device 300.

In an embodiment, the camera modules 311 and 312 may obtain an image related to the surrounding environment of the wearable electronic device.

In an embodiment, the camera modules 313, 314, 315, and 316 may obtain an image, while the wearable electronic device is worn by the user. The camera modules 313, 314, 315, and 316 may be used for hand detection and tracking, and user gesture (e.g., hand action) recognition. The camera modules 313, 314, 315, and 316 may be used for 3DoF or 6DoF head tracking, location (space or environment) recognition, and/or movement recognition. In an embodiment, the camera modules 311 and 312 may also be used for hand detection and tracking, and user gesture recognition.

In an embodiment, the depth sensor 317 may be configured to transmit a signal and receive a signal reflected from an object, and used for the purpose of identifying a distance to an object, such as time of flight (TOF). Alternatively or additionally to the depth sensor 217, the camera modules 213, 214, 215, and 216 may identify a distance to an object.

According to an embodiment, face recognition camera modules 325 and 326 and/or a display 321 (and/or a lens) may be disposed on the second surface 320 of the housing.

In an embodiment, the face recognition camera modules 325 and 326 adjacent to the display may be used for the purpose of recognizing the user's face or may recognize and/or track both eyes of the user.

In an embodiment, the display 321 (and/or the lens) may be disposed on the second surface 320 of the wearable electronic device 300. In an embodiment, the wearable electronic device 300 may not include the camera modules 315 and 316 among a plurality of camera modules 313, 314, 315, and 316. Although not shown in FIGS. 3A and 3B, the wearable electronic device 300 may further include at least one of the components illustrated in FIG. 2.

As described above, according to an embodiment, the wearable electronic device 300 may have a form factor for being worn on the user's head. The wearable electronic device 300 may further include a strap and/or a wearing member to be secured on the user's body part. The wearable electronic device 300 may provide a user experience based on augmented reality, virtual reality, and/or mixed reality, while worn on the user's head.

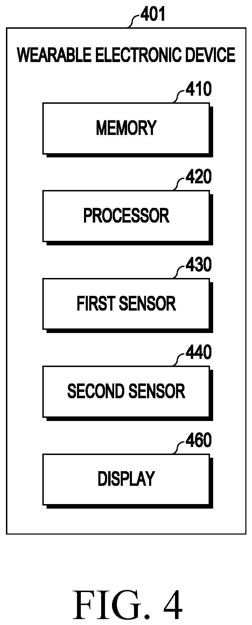

FIG. 4 is a block diagram illustrating a wearable electronic device according to an embodiment.

Referring to FIG. 4, according to an embodiment, a wearable electronic device 401 may include memory 410 (e.g., the memory 130 of FIG. 1), a processor 420 (e.g., the processor 120 of FIG. 1), a first sensor 430 (e.g., the sensor module 176 of FIG. 1), a second sensor 440 (e.g., the sensor module 176 of FIG. 1), and a display 460 (e.g., the display 160 of FIG. 1).

According to an embodiment, the wearable electronic device 401 may be implemented identically or similarly to the electronic device 101 of FIG. 1, the wearable electronic device 200 of FIG. 2, and the wearable electronic device 300 of FIGS. 3A and 3B. According to an embodiment, the wearable electronic device 401 may be implemented as augmented reality (AR) glasses, an extended reality (XR) device, a mixed reality (MR) device, a virtual reality (VR) device, or a video see-through (VST) device. However, this is merely an example, and embodiments of the disclosure may be implemented with various devices.

According to an embodiment, the memory 410 may store at least one instruction that causes at least one operation of the wearable electronic device 401.

In a conventional wearable electronic device, even if the resolutions of images stored in the wearable electronic device and objects (e.g., landscapes, people, and text) included in the images are different from each other, AR images corresponding to the images may be displayed at the same position with the same size. For example, the same position may refer to a specific position supported by the wearable electronic device. That is, even when displaying an AR image in a three-dimensional (3D) space, the conventional wearable electronic device displays the AR image at a specified position on it. Accordingly, even when displaying an AR image in a 3D space, the conventional wearable electronic device may not realistically provide the 3D effect of the AR image to a user.

The wearable electronic device 401 according to an embodiment may determine a 3D virtual region in which an AR image is to be displayed. That is, when displaying an AR image in a 3D space, the wearable electronic device 401 according to an embodiment may display an AR image corresponding to content at various positions in consideration of the characteristics of the content. Through this, when displaying an AR image in a 3D space, the wearable electronic device 401 according to an embodiment may realistically provide the 3D effect of the AR image to the user.

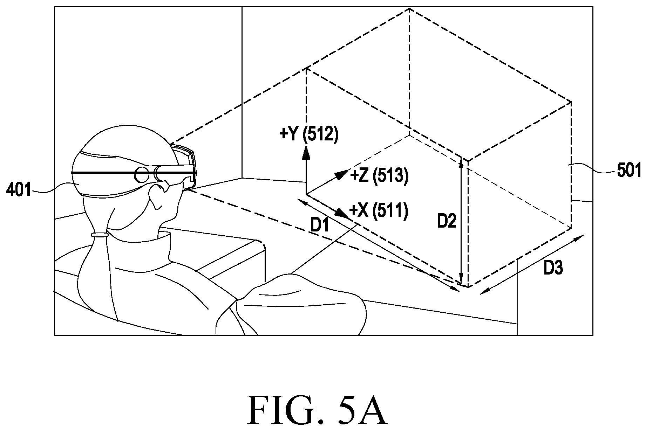

According to an embodiment, when the resolutions of images stored in the memory 410 and objects included in the images are different from each other, AR images corresponding to the images may be displayed at different positions with different sizes in a 3D virtual region. Based on an object included in an image and the resolution of the image, the wearable electronic device 401 according to an embodiment may determine a z-depth representing a distance between the wearable electronic device 401 and an AR image based on a third axis direction 513 (e.g., the third axis direction 513 of FIG. 5A) perpendicular to a first axis direction 511 (e.g., the first axis direction 511 of FIG. 5A) and a second axis direction 512 (e.g., the second axis direction 512 of FIG. 5A) in the virtual region. According to an embodiment, the wearable electronic device 401 may determine a position in a z-axis direction in the virtual region based on the z-depth and display the AR image, thereby providing the user with an effect of displaying the AR image in a 3D space.

According to an embodiment, the processor 420 may identify the region of the 3D space using the second sensor 440 or a camera. For example, the region of the 3D space may include the user's field of view (FOV) (e.g., the user's FOV region) or the FOV region of the camera. According to an embodiment, the processor 420 may render (or model) the identified region of the 3D space. Thereafter, according to an embodiment, the processor 420 may obtain the position of the wearable electronic device 401 in the rendered region of the 3D space and determine the first axis direction 511, the second axis direction 512, and the third axis direction 513.

According to an embodiment, the processor 420 may identify that the wearable electronic device 401 is worn by the user. According to an embodiment, the processor 420 may identify a user input to display a first AR image corresponding to a first image stored in the memory 410 on the display 460.

According to an embodiment, the processor 420 may obtain, through the first sensor 430, a first sensing value indicating an angle at which the wearable electronic device 401 is tilted. For example, the first sensor 430 may be implemented as an acceleration sensor, a gyro sensor, or a gravity sensor (or a geomagnetic sensor).

According to an embodiment, the processor 420 may identify a line of sight of the user wearing the wearable electronic device 401 through the second sensor 440. For example, the second sensor 440 may be implemented as a sensor capable of identifying the line of sight by identifying the eyes (e.g., pupil or iris) of the user wearing the wearable electronic device 401. Alternatively, according to an embodiment, the processor 420 may identify the line of sight of the user wearing the wearable electronic device 401 using an eye tracking camera (e.g., the first camera module 251 of FIG. 2 or the face recognition camera modules 325 and 326 of FIG. 3).

According to an embodiment, based on the first sensing value and the line of sight of the user, the processor 420 may determine (or identify) a virtual first region 501 (e.g., 501 in FIG. 5A) corresponding to a 3D space to be displayed as at least one AR image corresponding to at least one image stored in the memory 410. For example, the processor 420 may determine the virtual first region 501 corresponding to the user's FOV (e.g., the user's FOV region) within a 3D space identified by a camera included in the wearable electronic device 401 or by the user's vision. For example, the virtual first region 501 may be at least a partial region of the 3D space identified by the camera included in the wearable electronic device 401 or the user's vision. For example, the at least one image may include an image captured by the wearable electronic device 401 or an image obtained from an external electronic device.

For convenience of description, the following description will be given mainly of an operation of displaying the first AR image corresponding to the first image stored in the memory 410 by the processor 420. However, the disclosure may not be limited thereto. For example, the processor 420 may display a plurality of AR images corresponding to a plurality of images at the same position or different positions in the first region.

For example, the virtual first region 501 may include a region based on the first axis direction 511 (e.g., the first axis direction 511 of FIG. 5A), the second axis direction 512 (e.g., the second axis direction 512 of FIG. 5A), and the third axis direction 513 (e.g., the third axis direction 513 of FIG. 5A) that are perpendicular to each other. For example, the virtual first region 501 may include a region inside a rectangular parallelepiped. According to an embodiment, the virtual first region 501 may include a region inside a cube or a region inside a cylinder depending on implementation. However, this is merely an example, and the virtual first region 501 according to embodiments of the disclosure may be implemented as various types of regions having a 3D space.

For convenience of description, the following description is given based on the assumption that the first region is a 3D space in the form of a rectangular parallelepiped. However, the technical idea of the disclosure may not be limited thereto.

According to an embodiment, the processor 420 may analyze the first image. For example, the processor 420 may analyze or identify a resolution of the first image. Further, the processor 420 may analyze a screen or scene of the first image. For example, the processor 420 may identify at least one object included in the first image and analyze the screen or scene of the first image based on the identified at least one object. For example, the at least one object may include a person, text, the sky, or a landscape (e.g., a tree, a flower, grass, a mountain, or the sea). For example, when identifying that the first image includes a person, the processor 420 may determine that the first image is a portrait photograph. Alternatively, when identifying that the first image includes a plurality of pieces of text, the processor 420 may determine that the first image is a document photograph. Alternatively, when identifying that the first image includes a screen of a landscape or nature, the processor 420 may determine that the first image is a landscape photograph. For example, the processor 420 may identify at least one of the height of a person included in the first image, the size of a person's face, or the distance between the wearable electronic device 401 and the at least one object included in the first image. For example, in analyzing the first image, the processor 420 may use an artificial intelligence model stored in the memory 410 or an external server.

According to an embodiment, the processor 420 may identify the at least one object included in the first image based on metadata of the first image. According to an embodiment, when the first image is captured, the processor 420 may obtain information about the at least one object by analyzing the at least one object included in the first image. The processor 420 may store the information about the at least one object as the metadata of the first image. For example, when the first image is captured, the processor 420 may identify that an object included in the first image is an American Shorthair cat using the artificial intelligence model. The processor 420 may store in the metadata of the first image that the object included in the first image is an American Shorthair cat.

According to an embodiment, the processor 420 may determine (or identify) a position and size in which the first AR image is to be displayed in the virtual first region 501 based on the resolution of the first image and the at least one object included in the first image. For example, the position where the first AR image is to be displayed may refer to a 3D position.

According to an embodiment, based on the resolution of the first image and the at least one object included in the first image, the processor 420 may determine a first position based on the first axis direction 511 (e.g., the first axis direction 511 of FIG. 5A) and the second axis direction 512 (e.g., the second axis direction 512 of FIG. 5A) perpendicular to the first axis direction 511 in the virtual first region 501, and determine a second position based on the third axis direction 513 (e.g., the third axis direction 513 of FIG. 5A) perpendicular to the first axis direction 511 and the second axis direction 512 in the virtual first region 501. For example, the first axis direction 511 may represent a left-right direction (e.g., x-axis direction) with respect to the wearable electronic device 401. For example, the second axis direction 512 may represent an up-down direction (e.g., y-axis direction) with respect to the wearable electronic device 401. For example, the third axis direction 513 may represent a forward-backward direction (e.g., z-axis direction) with respect to the wearable electronic device 401. According to an embodiment, the processor 420 may determine the position where the first AR image is to be displayed in the virtual first region 501 based on the first position and the second position.

According to an embodiment, the processor 420 may determine (or identify) a distance between the wearable electronic device 401 and the first AR image based on the third axis direction 513 in the virtual first region 501, based on the resolution of the first image. According to an embodiment, the processor 420 may determine the second position in the virtual first region 501 based on the distance between the AR image and the wearable electronic device 401. According to an embodiment, a lookup table representing a relationship between the resolutions of images and the distances between AR images and the wearable electronic device 401 may be stored in the memory 410. For example, the processor 420 may determine the second position using the lookup table. According to an embodiment, the processor 420 may determine the second position in the virtual first region 501 such that as the resolution of the first image increases, the distance between the wearable electronic device 401 and the first AR image based on the third axis direction 513 increases. For example, based on the third axis direction 513, the first AR image may move farther away from the user (or the user's FOV) as the distance between the first AR image and the wearable electronic device 401 increases. According to an embodiment, the processor 420 may determine the second position in the virtual first region 501 such that as the resolution of the first image decreases, the distance between the wearable electronic device 401 and the first AR image based on the third axis direction 513 decreases.

According to an embodiment, the processor 420 may determine (or identify) the size of the first AR image corresponding to the resolution of the first image. According to an embodiment, a lookup table representing a relationship between the resolutions of images and the sizes of AR images may be stored in the memory 410. For example, the processor 420 may determine the size of the first AR image using the lookup table. According to an embodiment, the processor 420 may determine the size of the first AR image to be larger as the resolution of the first image is higher. According to an embodiment, the processor 420 may determine the size of the first AR image to be smaller as the resolution of the first image is lower.

According to an embodiment, the processor 420 may identify that the first image includes a full-body image of a person. According to an embodiment, based on identifying that the first image includes the full-body image of the person, the processor 420 may determine the position and size of the first AR image corresponding to a height of the person included in the metadata of the first image. According to an embodiment, a lookup table representing a relationship between the heights of persons included in images and the positions of AR images may be stored in the memory 410. According to an embodiment, a lookup table representing a relationship between the heights of persons included in images and the sizes of AR images may be stored in the memory 410. For example, the processor 420 may determine the position and size of the first AR image corresponding to the height of the person using the lookup tables. For example, the processor 420 may adjust the size of the first AR image such that the height of the person included in the image corresponds to the height of the person included in the first AR image, based on information about a real world obtained using the second sensor 440.

For example, the processor 420 may determine the size of the first AR image to be displayed in the virtual first region 501 to be larger as the height of the person is greater. For example, the processor 420 may determine the second position in the virtual first region 501 such that the distance between the wearable electronic device 401 and the first AR image based on the third axis direction 513 increases as the height of the person is greater. Depending on implementation, the processor 420 may determine the size of the first AR image to be displayed in the virtual first region 501 to be larger as the height of the person is smaller. Depending on implementation, the processor 420 may determine the second position in the virtual first region such that the distance between the wearable electronic device 401 and the first AR image based on the third axis direction 513 decreases as the height of the person is greater.

According to an embodiment, based on identifying that the first image includes an image of the upper body of a person, the processor 420 may determine (or identify) the position and size of the first AR image such that the person's face is positioned at the eye height of the user wearing the wearable electronic device 401.

According to an embodiment, based on identifying that the first image includes an image of the upper body of a person, the processor 420 may determine the position and size of the first AR image corresponding to a size of the person's face included in the metadata of the first image. According to an embodiment, the processor 420 may determine the size of the first AR image displayed in the virtual first region 501 to be larger as the size of the face is larger. According to an embodiment, the processor 420 may determine the second position in the virtual first region such that the distance between the wearable electronic device 401 and the first AR image based on the third axis direction 513 is closer as the size of the face is larger.

According to an embodiment, based on identifying that the first image includes text, the processor 420 may determine (or identify) the position and size of the first AR image such that the text is displayed in a specified size. For example, the specified size may include a font size set as a default in a user interface (UI) of the wearable electronic device 401. For example, the specified size may be specified by the user or automatically specified by the processor 420.

According to an embodiment, based on identifying that the first image includes an image captured of the sky (e.g., clouds, the moon, the sun, or a star), the processor 420 may determine (or identify) the position and size of the first AR image such that the first AR image is positioned at a higher position than the user's eyes. According to an embodiment, based on identifying that the first image includes an image captured of the sky, the processor 420 may determine the position and size of the first AR image such that the first AR image is displayed tilted at a specified angle with respect to the first wearable electronic device 401.

According to an embodiment, the processor 420 may determine (or identify) the position of the first AR image based on the metadata of the first image. According to an embodiment, the processor 420 may identify a distance based on the third axis direction 513 between the at least one object included in the first image and the wearable electronic device 401 that captured the first image, which is included in the metadata of the first image. According to an embodiment, the processor 420 may determine the second position of the first AR image based on the distance based on the third axis direction 513 between the wearable electronic device 401 and the at least one object included in the first image. According to an embodiment, when the first image is an image captured by an external electronic device, the metadata of the first image may include a distance based on the third axis direction 513 between the external electronic device that captured the first image and the at least one object included in the first image.

According to an embodiment, the processor 420 may identify a tilt angle between the wearable electronic device 401 that captured the first image and the at least one object included in the first image, which is included in the metadata of the first image. According to an embodiment, the processor 420 may determine the first position and the second position of the first AR image based on the tilt angle between the wearable electronic device 401 and the at least one object included in the first image. For example, the processor 420 may display the first AR image in a tilted state in the virtual first region 501. According to an embodiment, when the first image is an image captured by an external electronic device, the metadata of the first image may include a tilt angle between the external electronic device that captured the first image and the at least one object included in the first image.

According to an embodiment, the processor 420 may determine a second position based on the third axis direction 513, at which the first AR image is displayed when the first image includes a person to be closer to the wearable electronic device 401 than a second position based on the third axis direction 513, at which the first AR image is displayed when the first image includes a landscape.

According to an embodiment, the processor 420 may determine a second position based on the third axis direction 513, at which the first AR image is displayed when the first image includes text to be closer to the wearable electronic device 401 than a second position based on the third axis direction 513, at which the first AR image is displayed when the first image includes a landscape.

According to an embodiment, the processor 420 may store the position where the first AR image is displayed in the virtual first region 501 and the size in which it is displayed at the position in the memory 410. According to an embodiment, when identifying an input to display the first image on the display 460, the processor 420 may display the first AR image in the virtual first region 501 based on the position and size stored in the memory 410.

The operations of the wearable electronic device 401 described with reference to the following drawings may be performed by the processor 420. However, for convenience of description, the operations performed by the processor 420 will be described as being performed by the wearable electronic device 401.

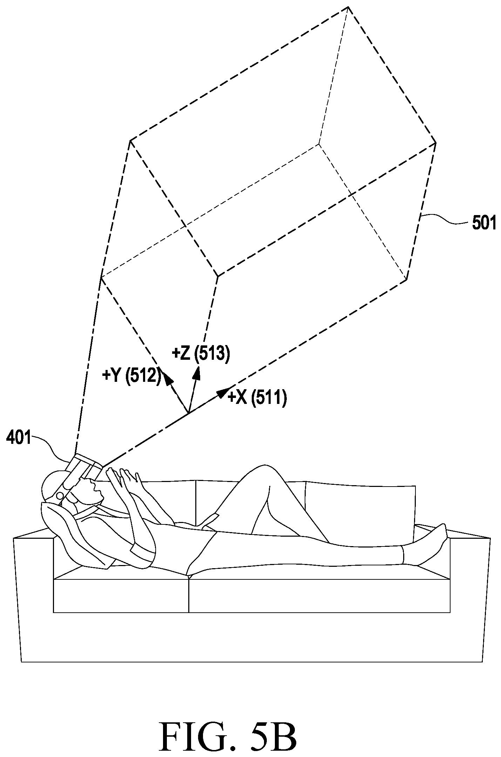

FIGS. 5A and 5B are diagrams illustrating a virtual first region according to an embodiment.

Referring to FIGS. 5A and 5B, according to an embodiment, the wearable electronic device 401 may identify a first sensing value indicating an angle at which the wearable electronic device 401 is tilted using the first sensor 430 (e.g., the first sensor 430 of FIG. 4). For example, according to an embodiment, the wearable electronic device 401 may identify a first sensing value indicating an angle at which the wearable electronic device 401 is tilted with respect to a horizontal plane. For example, according to an embodiment, the wearable electronic device 401 may identify a first sensing value indicating an angle at which the wearable electronic device 401 is tilted with respect to a vertical plane perpendicular to the horizontal plane.

According to an embodiment, the wearable electronic device 401 may identify a line of sight of the user wearing the wearable electronic device 401 using the second sensor 440 (e.g., the second sensor 440 of FIG. 4).

According to an embodiment, the wearable electronic device 401 may determine the virtual first region 501 corresponding to the user's FOV based on the first sensing value and the line of sight of the user. For example, the virtual first region 501 corresponding to the FOV of the user may include a region determined based on the FOV region of the user wearing the wearable electronic device 401.

According to an embodiment, the virtual first region 501 may include a virtual region corresponding to a 3D space including the first axis direction 511, the second axis direction 512, and the third axis direction 513 that are perpendicular to each other. For example, the first axis direction 511 (e.g., X-axis direction) may represent the left-right direction with respect to the wearable electronic device 401. For example, the second axis direction 512 (e.g., Y-axis direction) may represent the up-down direction with respect to the wearable electronic device 401. For example, the third axis direction 513 (e.g., Z-axis direction) may represent the forward-backward direction with respect to the wearable electronic device 401.

According to an embodiment, the wearable electronic device 401 may determine a distance (e.g., D1) in the first axis direction 511 of the virtual first region 501 based on the FOV region of the user.

According to an embodiment, the wearable electronic device 401 may determine a distance (e.g., D2) in the second axis direction 512 of the virtual first region 501 based on the FOV region of the user.

According to an embodiment, the wearable electronic device 401 may determine a distance (e.g., D3) in the third axis direction 513 of the virtual first region 501, which represents a distance between a specified first position separated by a specified first distance from the wearable electronic device 401 based on the third axis direction 513 and a specified second position separated by a specified second distance from the specified first position. For example, the specified first distance and the specified second distance may be set by the user or the processor 420 (e.g., the processor 420 of FIG. 4).

According to an embodiment, the wearable electronic device 401 may determine the virtual first region 501 based on the distance (e.g., D1) in the first axis direction 511, the distance (e.g., D2) in the second axis direction 512, and the distance (e.g., D3) in the third axis direction 513.

According to an embodiment, the virtual first region 501 may include a region inside a rectangular parallelepiped. According to an embodiment, the virtual first region 501 may include a region inside a cube or a region inside a cylinder depending on implementation. However, this is merely an example, and the virtual first region 501 according to embodiments of the disclosure may be implemented as regions of various geometric shapes.

According to an embodiment, the wearable electronic device 401 may determine the first position based on the first axis direction 511 and the second axis direction 512 in the virtual first region 501, and may determine the second position based on the third axis direction 513 in the virtual first region 501. For example, the first position may include a position based on an X-axis coordinate and a Y-axis coordinate. For example, the second position may include a position based on a Z-axis coordinate.

According to an embodiment, the wearable electronic device 401 may determine a position based on the third axis direction 513 in the virtual first region 501 based on a z-depth representing a distance based on the third axis direction 513 between the wearable electronic device 401 and an AR image. Through this, the wearable electronic device 401 according to an embodiment may provide the user with an effect of displaying an AR image in a 3D space.

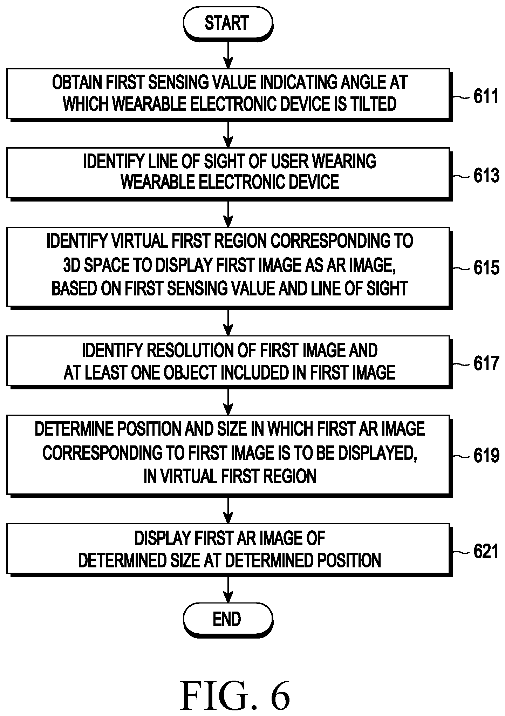

FIG. 6 is a flowchart illustrating an operation of displaying an AR image in a virtual first region by a wearable electronic device according to an embodiment.

Referring to FIG. 6, according to an embodiment, in operation 611, the wearable electronic device 401 (e.g., the wearable electronic device 401 of FIG. 4) may obtain a first sensing value indicating an angle at which the wearable electronic device is tilted through the first sensor 430 (e.g., the first sensor 430 of FIG. 4).

According to an embodiment, in operation 613, the wearable electronic device 401 may identify a line of sight of the user wearing the wearable electronic device 401 through the second sensor 440 (e.g., the second sensor 440 of FIG. 4).

According to an embodiment, in operation 615, the wearable electronic device 401 may determine the virtual first region 501 (e.g., the virtual first region 501 of FIG. 5A) corresponding to a 3D space including the first axis direction 511 (e.g., the first axis direction 511 of FIG. 5A), the second axis direction 512 (e.g., the second axis direction 512 of FIG. 5A), and the third axis direction 513 (e.g., the third axis direction 513 of FIG. 5A) that are perpendicular to each other, based on the first sensing value and the line of sight. According to an embodiment, the virtual first region 501 may include a region corresponding to the FOV of the user (e.g., the FOV region of the user). For example, the virtual first region 501 may be at least a partial region of a 3D space identified by a camera included in the wearable electronic device 401 or by the user's vision.

According to an embodiment, the first axis direction 511 (e.g., X-axis direction) may represent the left-right direction with respect to the wearable electronic device 401. For example, the second axis direction 512 (e.g., Y-axis direction) may represent the up-down direction with respect to the wearable electronic device 401. For example, the third axis direction 513 (e.g., Z-axis direction) may represent the forward-backward direction with respect to the wearable electronic device 401.

According to an embodiment, the virtual first region 501 may include a region inside a rectangular parallelepiped. However, this is merely an example, and the virtual first region 501 according to embodiments of the disclosure may be implemented as various types of regions having a 3D space.

According to an embodiment, in operation 617, the wearable electronic device 401 may identify the resolution of a first image stored in the memory 410 (e.g., the memory 410 of FIG. 4) and at least one object included in the first image. According to an embodiment, the at least one object may include a person, an animal, text, the sky, or a landscape. For example, the first image may include an image captured by the wearable electronic device 401 or an image obtained by the wearable electronic device 401 from an external electronic device.

According to an embodiment, the wearable electronic device 401 may analyze the first image. For example, in analyzing the first image, the wearable electronic device 401 may use an artificial intelligence model stored in the memory 410 or an external server. According to an embodiment, the wearable electronic device 401 may analyze or identify the resolution of the first image. According to an embodiment, the wearable electronic device 401 may identify at least one object included in the first image and analyze a screen or scene of the first image based on the identified at least one object.

For example, when identifying that the first image includes a person, the wearable electronic device 401 may determine that the first image is a portrait photograph. Alternatively, when identifying that the first image includes a plurality of pieces of text, the wearable electronic device 401 may determine that the first image is a document photograph. Alternatively, when identifying that the first image includes a screen of a landscape or nature, the wearable electronic device 401 may determine that the first image is a landscape photograph. For example, the wearable electronic device 401 may also identify at least one of the height of a person included in the first image, the size of a person's face, or the distance between the wearable electronic device 401 and at least one object included in the first image.

According to an embodiment, in operation 619, the wearable electronic device 401 may determine a position and a size in which the first AR image is to be displayed in the virtual first region 501, based on the resolution and the at least one object. According to an embodiment, the wearable electronic device 401 may determine a first position based on the first axis direction 511 and the second axis direction 512 perpendicular to the first axis direction 511 in the virtual first region 501. According to an embodiment, the wearable electronic device 401 may determine a second position based on the third axis direction 513 perpendicular to the first axis direction 511 and the second axis direction 512 in the virtual first region 501. According to an embodiment, the wearable electronic device 401 may determine the position where the first AR image is to be displayed in the virtual first region 501 based on the first position and the second position.

According to an embodiment, in operation 621, the wearable electronic device 401 may display the first AR image of the determined size at the determined position in the virtual first region 501 on the display 460 (e.g., the display 460 of FIG. 4).

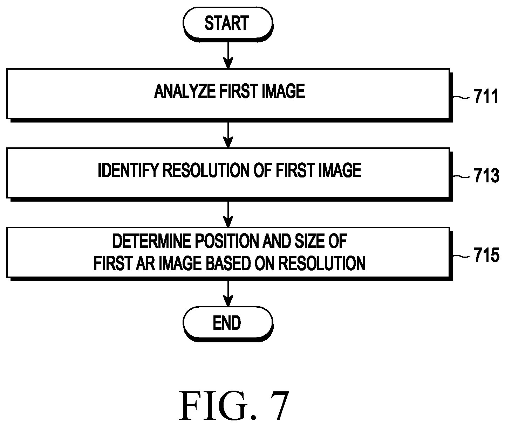

FIG. 7 is a flowchart illustrating an operation of determining a position and size of a first AR image based on the resolution of a first image by a wearable electronic device according to an embodiment.

Referring to FIG. 7, according to an embodiment, in operation 711, the wearable electronic device 401 (e.g., the wearable electronic device 401 of FIG. 4) may analyze a first image stored in the memory 410 (e.g., the memory 410 of FIG. 4).

According to an embodiment, in operation 713, the wearable electronic device 401 may identify the resolution of the first image stored in the memory 410, based on analyzing the first image.

According to an embodiment, in operation 715, the wearable electronic device 401 may determine a position and size of a first AR image corresponding to the first image in the virtual first region 501 (e.g., the virtual first region 501 of FIG. 5A) based on the resolution of the first image.

According to an embodiment, a lookup table representing a relationship between the resolutions of images and the sizes of AR images may be stored in the memory 410. According to an embodiment, the wearable electronic device 401 may determine the size of the first AR image corresponding to the first image using the lookup table. According to an embodiment, the wearable electronic device 401 may determine the size of the first AR image to be larger as the resolution is higher.

According to an embodiment, a lookup table representing a relationship between the resolutions of images and the distances between AR images and the wearable electronic device 401 may be stored in the memory 410. According to an embodiment, the wearable electronic device 401 may determine the distance between the wearable electronic device 401 and the first AR image based on the third axis direction 513 (e.g., the third axis direction 513 of FIG. 5A) using the lookup table. According to an embodiment, the wearable electronic device 401 may determine the second position such that as the resolution is higher, the distance between the wearable electronic device 401 and the first AR image based on the third axis direction 513 increases.

According to an embodiment, the wearable electronic device 401 may display the first AR image in the virtual first region (e.g., the virtual first region 501 of FIG. 5A) based on the determined position and size on the display 460 (e.g., the display 460 of FIG. 4).

Through this, according to an embodiment, the wearable electronic device 401 may determine a z-depth representing a distance between the wearable electronic device 401 and the first AR image based on the third axis direction 513 in the virtual first region 501, based on the resolution of the first image, thereby realistically providing the user with an effect of displaying an AR image in a 3D space.

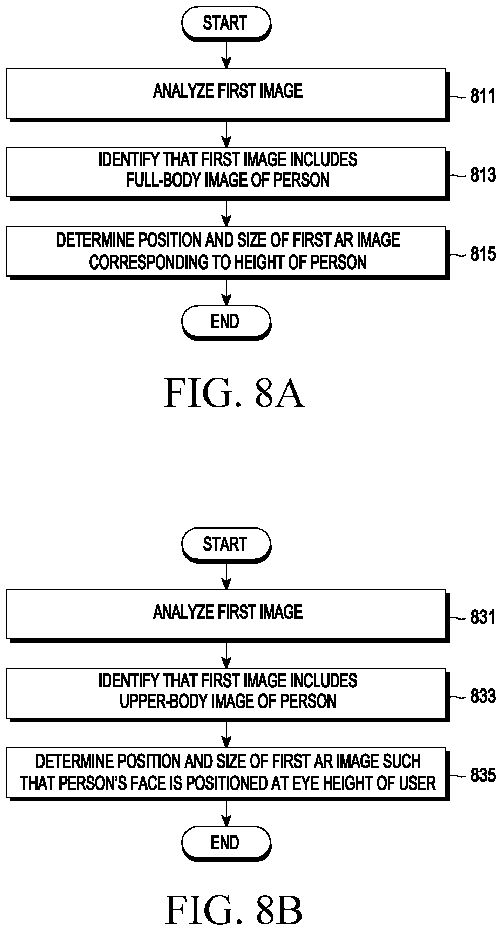

FIG. 8A is a flowchart illustrating an operation of determining a position and size of a first AR image by a wearable electronic device, when a first image includes a full-body image of a person, according to an embodiment.

Referring to FIG. 8A, according to an embodiment, in operation 811, the wearable electronic device 401 (e.g., the wearable electronic device 401 of FIG. 4) may analyze a first image stored in the memory 410 (e.g., the memory 410 of FIG. 4).

According to an embodiment, in operation 813, the wearable electronic device 401 may identify that the first image includes a full-body image of a person, based on analyzing the first image. According to an embodiment, the wearable electronic device 401 may identify metadata of the first image. For example, the metadata of the first image may include a height of a person included in the first image.

According to an embodiment, in operation 815, the wearable electronic device 401 may determine a position and size of the first AR image corresponding to the height of the person. According to an embodiment, a lookup table representing a relationship between the heights of persons included in images and the positions of AR images may be stored in the memory 410. According to an embodiment, a lookup table representing a relationship between the heights of persons included in images and the sizes of AR images may be stored in the memory 410. According to an embodiment, the wearable electronic device 401 may determine the position and size of the first AR image corresponding to the first image using the lookup table.

According to an embodiment, the wearable electronic device 401 may determine the size of the first AR image to be displayed in the virtual first region 501 to be larger as the height of the person is greater. For example, the processor 420 may determine the second position such that as the height of the person is greater, the distance between the wearable electronic device 401 and the first AR image based on the third axis direction 513 increases.

According to an embodiment, the wearable electronic device 401 may display the first AR image in the virtual first region (e.g., the virtual first region 501 of FIG. 5A) on the display 460 (e.g., the display 460 of FIG. 4) based on the determined position and size.

FIG. 8B is a flowchart illustrating an operation of determining a position and size of a first AR image by a wearable electronic device, when a first image includes an image of the upper body of a person, according to an embodiment.

Referring to FIG. 8B, according to an embodiment, in operation 831, the wearable electronic device 401 (e.g., the wearable electronic device 401 of FIG. 4) may analyze a first image stored in the memory 410 (e.g., the memory 410 of FIG. 4).

According to an embodiment, in operation 833, the wearable electronic device 401 may identify that the first image includes an image of the upper body of a person, based on analyzing the first image.

According to an embodiment, in operation 835, the wearable electronic device 401 may determine a position and size of the first AR image in the virtual first region 501 such that the person's face is positioned at the eye height of the user. According to an embodiment, the wearable electronic device 401 may determine a first position based on the first axis direction 511 and the second axis direction 512 in the virtual first region 501, and determine a second position based on the third axis direction 513 in the virtual first region 501, such that the person's face is positioned at the eye height of the user. According to an embodiment, the wearable electronic device 401 may determine the position of the first AR image based on the first position and the second position.

According to an embodiment, the wearable electronic device 401 may display the first AR image in the virtual first region 501 (e.g., the virtual first region 501 of FIG. 5A) on the display 460 (e.g., the display 460 of FIG. 4) based on the determined position and size.

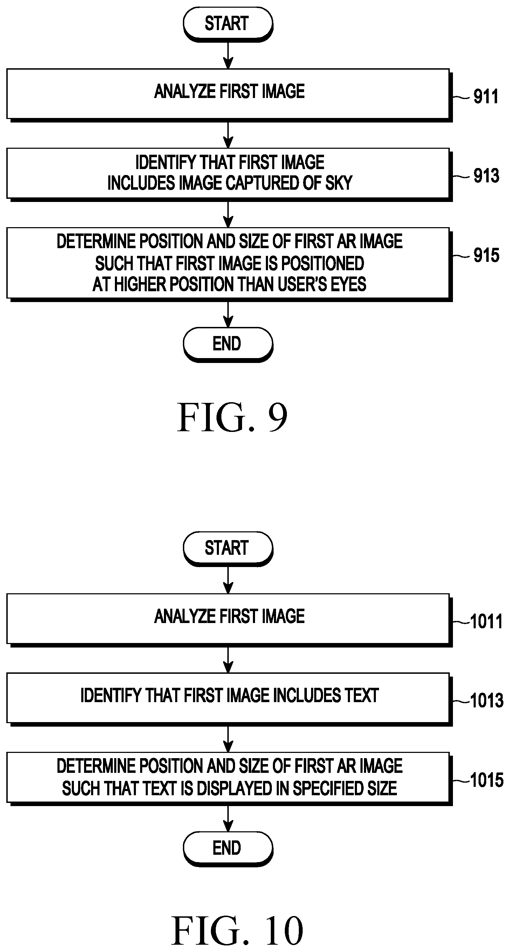

FIG. 9 is a flowchart illustrating an operation of determining a position and size of a first AR image by a wearable electronic device, when a first image includes an image captured of the sky, according to an embodiment.

Referring to FIG. 9, according to an embodiment, in operation 911, the wearable electronic device 401 (e.g., the wearable electronic device 401 of FIG. 4) may analyze a first image stored in the memory 410 (e.g., the memory 410 of FIG. 4).

According to an embodiment, in operation 913, the wearable electronic device 401 may identify that the first image includes an image captured of the sky, based on analyzing the first image.

According to an embodiment, in operation 915, the wearable electronic device 401 may determine a position and size of the first AR image in the virtual first region 501 such that the first image is displayed at a position higher than the user's eyes.

According to an embodiment, the wearable electronic device 401 may determine a first position based on the first axis direction 511 and the second axis direction 512 in the virtual first region 501, and determine a second position based on the third axis direction 513 in the virtual first region 501, such that the first image is displayed at a position higher than the user's eyes. According to an embodiment, the wearable electronic device 401 may determine the position of the first AR image based on the first position and the second position.

According to an embodiment, the wearable electronic device 401 may display the first AR image in the virtual first region 501 (e.g., the virtual first region 501 of FIG. 5A) on the display 460 (e.g., the display 460 of FIG. 4) based on the determined position and size.

FIG. 10 is a flowchart illustrating an operation of determining a position and size of a first AR image by a wearable electronic device, when a first image includes text, according to an embodiment.

Referring to FIG. 10, according to an embodiment, in operation 1011, the wearable electronic device 401 (e.g., the wearable electronic device 401 of FIG. 4) may analyze a first image stored in the memory 410 (e.g., the memory 410 of FIG. 4).

According to an embodiment, in operation 1013, the wearable electronic device 401 may identify that the first image includes text, based on analyzing the first image.

According to an embodiment, in operation 1015, the wearable electronic device 401 may determine a position and size of the first AR image in the virtual first region 501 (e.g., the virtual first region 501 of FIG. 5A) such that the text is displayed in a specified size. For example, the specified size may include a font size set as a default in a UI of the wearable electronic device 401. For example, the specified size may be specified by the user or automatically specified by the processor 420 (e.g., the processor 420 of FIG. 4).

According to an embodiment, the wearable electronic device 401 may determine a first position based on the first axis direction 511 (e.g., the first axis direction 511 of FIG. 5A) and the second axis direction 512 (e.g., the second axis direction 512 of FIG. 5A) in the virtual first region 501, and determine a second position based on the third axis direction 513 (e.g., the third axis direction 513 of FIG. 5A) in the virtual first region 501, such that the text is displayed in the specified size. According to an embodiment, the wearable electronic device 401 may determine the position of the first AR image based on the first position and the second position.

According to an embodiment, the wearable electronic device 401 may display the first AR image in the virtual first region 501 on the display 460 (e.g., the display 460 of FIG. 4) based on the determined position and size.

Through this, according to an embodiment, the wearable electronic device 401 may display the text of the first image in a size convenient for the user to identify the text.

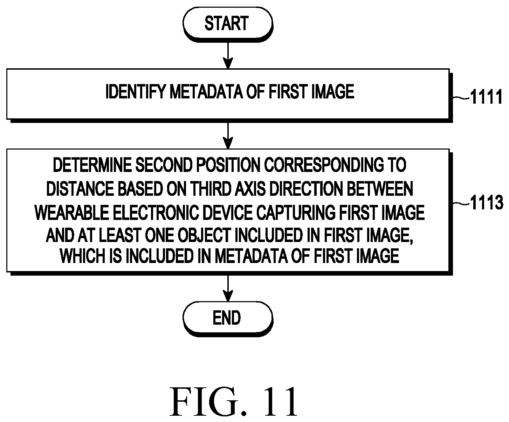

FIG. 11 is a flowchart illustrating an operation of determining a position and size of a first AR image based on metadata of a first image by a wearable electronic device according to an embodiment.

Referring to FIG. 11, according to an embodiment, in operation 1111, the wearable electronic device 401 (e.g., the wearable electronic device 401 of FIG. 4) may identify metadata of a first image stored in the memory 410 (e.g., the memory 410 of FIG. 4). According to an embodiment, the metadata of the first image may include a distance based on the third axis direction 513 (e.g., the third axis direction 513 of FIG. 5A) between the wearable electronic device 401 that captured the first image and at least one object included in the first image. According to an embodiment, when the first image is an image captured by an external electronic device, the metadata of the first image may include a distance based on the third axis direction 513 between the external electronic device that captured the first image and at least one object included in the first image.

According to an embodiment, in operation 1113, the wearable electronic device 401 may determine a second position corresponding to the distance based on the third axis direction 513 between the wearable electronic device 401 that captured the first image and the at least one object included in the first image, which is included in the metadata of the first image.

According to an embodiment, the wearable electronic device 401 may display the first AR image in the virtual first region 501 on the display 460 (e.g., the display 460 of FIG. 4) based on the determined position and size.

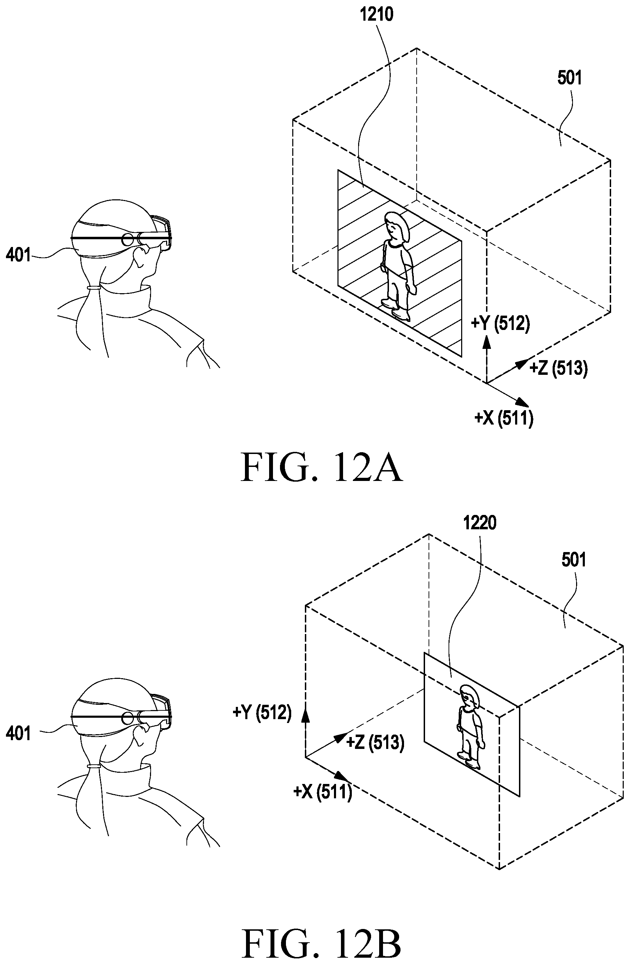

FIGS. 12A and 12B are diagrams illustrating an operation of determining a position and size of a first AR image based on the resolution of a first image by a wearable electronic device according to an embodiment.

Referring to FIG. 12A, according to an embodiment, the wearable electronic device 401 (e.g., the wearable electronic device 401 of FIG. 4) may identify the resolution of a first image stored in the memory 410 (e.g., the memory 410 of FIG. 4). According to an embodiment, based on identifying that the resolution of the first image is a first resolution, the wearable electronic device 401 may display a first AR image 1210 corresponding to the first image in a first size in the virtual first region 501 (e.g., the virtual first region 501 of FIG. 5A).

According to an embodiment, based on the first resolution, the wearable electronic device 401 may determine a second position of the first AR image 1210 in the virtual first region 501 so as to display the first AR image 1210 at a position separated by a first distance from the wearable electronic device 401 with respect to the third axis direction 513.

Referring to FIG. 12B, according to an embodiment, based on identifying that the resolution of a second image is a second resolution higher than the first resolution, the wearable electronic device 401 may display a second AR image 1220 corresponding to the second image in a second size smaller than the first size in the virtual first region 501.

According to an embodiment, based on the second resolution, the wearable electronic device 401 may determine a second position of the second AR image 1220 so as to display the second AR image 1220 at a position separated by a second distance greater than the first distance from the wearable electronic device 401 with respect to the third axis direction 513.

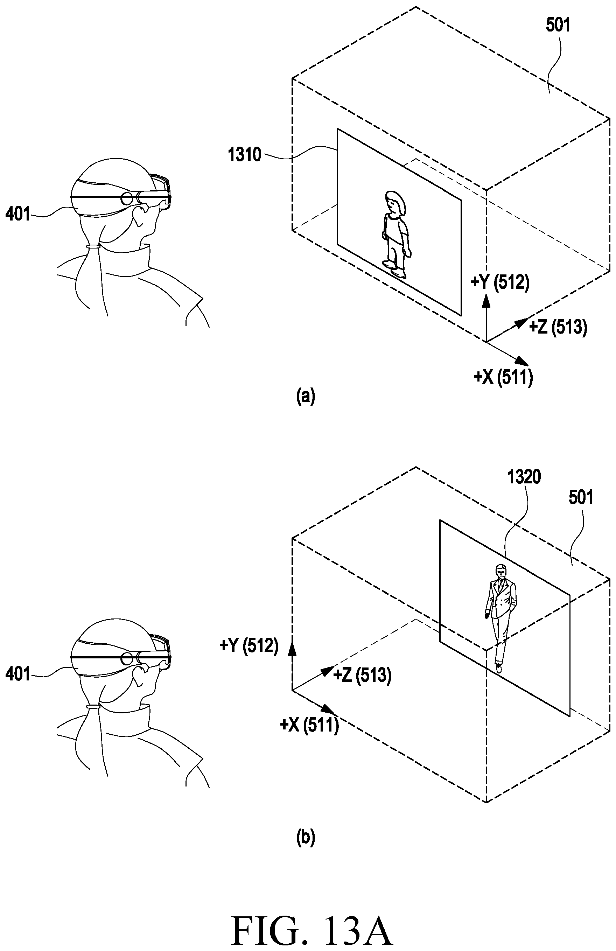

FIG. 13A is a diagram illustrating an operation of determining a position and size of a first AR image based on the height of a person by a wearable electronic device, when a first image includes the full body of the person, according to an embodiment.

Referring to (a) of FIG. 13A, according to an embodiment, the wearable electronic device 401 (e.g., the wearable electronic device 401 of FIG. 4) may analyze a first image. According to an embodiment, the wearable electronic device 401 may identify that the first image includes the full body of a person based on a result of analyzing the first image. According to an embodiment, the wearable electronic device 401 may identify a height of the person included in metadata of the first image.

According to an embodiment, based on identifying that the height of the person included in the first image is a first length, the wearable electronic device 401 may determine a position of a first AR image 1310 in the virtual first region 501 (e.g., the virtual first region 501 of FIG. 5A) so as to display the first AR image 1310 corresponding to the first image at a second position separated by a first distance from the wearable electronic device 401 with respect to the third axis direction 513 (e.g., the third axis direction 513 of FIG. 5A).

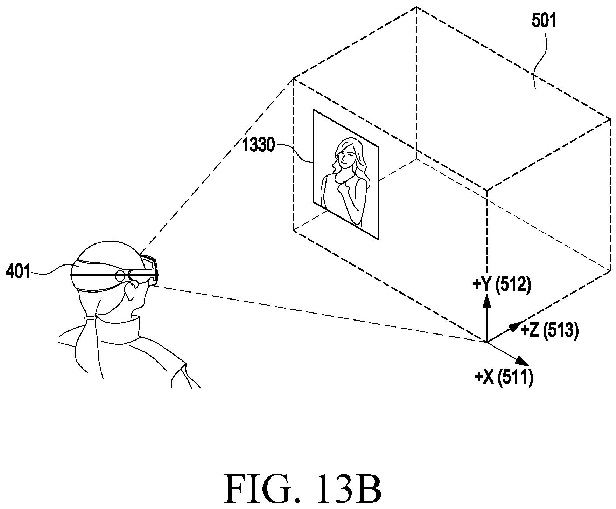

Referring to (b) of FIG. 13, according to an embodiment, based on identifying that the height of a person included in a second image is a second length longer than the first length, the wearable electronic device 401 may determine a second position of a second AR image 1320 in the virtual first region 501 so as to display the second AR image 1320 corresponding to the second image at a position separated by a second distance greater than the first distance from the wearable electronic device 401 with respect to the third axis direction 513.

FIG. 13B is a diagram illustrating an operation of determining a position and size of a first AR image by a wearable electronic device such that the person's face is displayed at the eye height of a user, when a first image includes the upper body of a person, according to an embodiment.

Referring to (a) of FIG. 13B, according to an embodiment, the wearable electronic device 401 (e.g., the wearable electronic device 401 of FIG. 4) may analyze a first image. According to an embodiment, the wearable electronic device 401 may identify that the first image includes the upper body of a person based on a result of analyzing the first image.

According to an embodiment, based on identifying that the first image includes an upper-body image of the person, the wearable electronic device 401 may determine a position and size of a first AR image 1330 corresponding to the first image such that the person's face is positioned at the eye height of the user.

According to an embodiment, the wearable electronic device 401 may determine a first position based on the first axis direction 511 (e.g., the first axis direction 511 of FIG. 5A) and the second axis direction 512 (e.g., the second axis direction 512 of FIG. 5A) in the virtual first region 501 (e.g., the virtual first region 501 of FIG. 5A), and determine a second position based on the third axis direction 513 (e.g., the third axis direction 513 of FIG. 5A) in the virtual first region 501, such that the person's face is positioned at the eye height of the user. According to an embodiment, the wearable electronic device 401 may determine the position of the first AR image 1330 based on the first position and the second position.

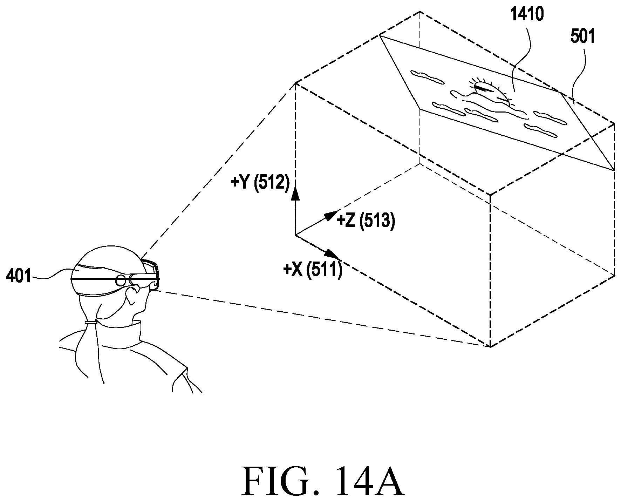

FIG. 14A is a diagram illustrating an operation of determining a position and size of a first AR image by a wearable electronic device, when a first image includes an image captured of the sky, according to an embodiment.

Referring to FIG. 14A, according to an embodiment, the wearable electronic device 401 (e.g., the wearable electronic device 401 of FIG. 4) may analyze a first image. According to an embodiment, the wearable electronic device 401 may identify that the first image includes an image captured of the sky (e.g., the moon, the sun, or clouds) based on a result of analyzing the first image.

According to an embodiment, based on identifying that the first image includes an image captured of the sky (e.g., the moon, the sun, or clouds), the wearable electronic device 401 may determine a position and size of a first AR image 1410 corresponding to the first image in the virtual first region 501 (e.g., the virtual first region 501 of FIG. 5A) such that the sky is positioned at a position higher than the user's eyes.

The wearable electronic device 401 may display the first AR image 1410 in a state tilted at a specified angle with respect to the wearable electronic device 401.

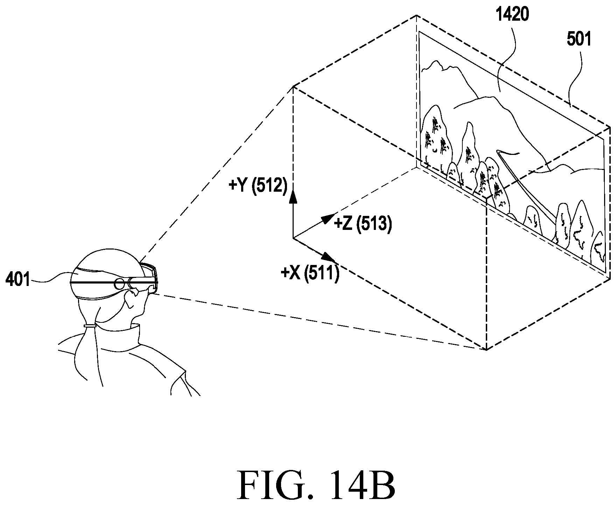

FIG. 14B is a diagram illustrating an operation of determining a position and size of a first AR image by a wearable electronic device, when a first image includes an image captured of a landscape, according to an embodiment.

Referring to FIG. 14B, according to an embodiment, the wearable electronic device 401 (e.g., the wearable electronic device 401 of FIG. 4) may analyze a first image. According to an embodiment, the wearable electronic device 401 may identify that the first image includes an image captured of a landscape (e.g., a tree, grass, a mountain, the sea, or a flower) based on a result of analyzing the first image.

According to an embodiment, based on identifying that the first image includes an image captured of a landscape (e.g., a tree, grass, a mountain, the sea, or a flower), the wearable electronic device 401 may determine a second position as a position farthest from the wearable electronic device 401 with respect to the third axis direction 513 (e.g., the third axis direction 513 of FIG. 5A) in the virtual first region 501 (e.g., the virtual first region 501 of FIG. 5A).

According to an embodiment, the wearable electronic device 401 may display a first AR image 1420 corresponding to the first image based on the second position.

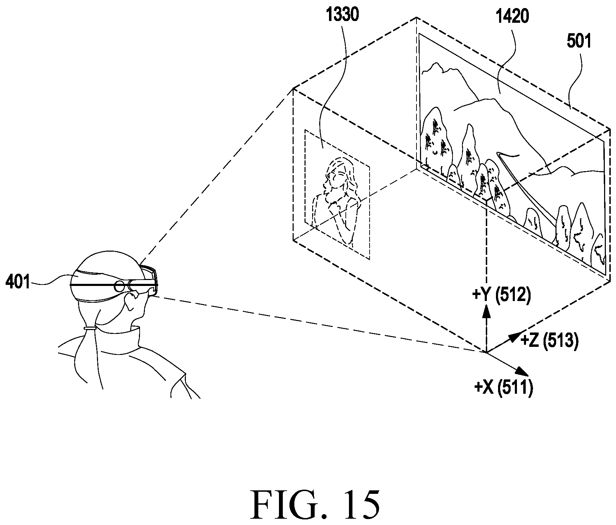

FIG. 15 is a diagram comparing a position and size of a first AR image when a first image is an image captured of a landscape with a position and size of the first AR image when the first image includes the upper body of a person, according to an embodiment.

Referring to FIG. 15, for convenience of description, the AR images 1330 and 1420 are shown as being displayed simultaneously to describe their display positions in the virtual first region 501. However, it is described that only one of the AR images 1330 and 1420 is displayed in the virtual first region 501 (e.g., the virtual first region 501 of FIG. 5A).

According to an embodiment, the resolution of the first image corresponding to the first AR image 1330 and the resolution of the second image corresponding to the second AR image 1420 may be identical to each other.

According to an embodiment, based on identifying that the first image includes the upper body of a person, the wearable electronic device 401 (e.g., the wearable electronic device 401 of FIG. 4) may determine the position of the first AR image 1330 in the virtual first region 501 such that the person's face is positioned at the eye height of the user wearing the wearable electronic device 401.

According to an embodiment, based on identifying that the second image includes an image captured of a landscape (e.g., a tree, grass, a mountain, the sea, or a flower), the wearable electronic device 401 may determine a position farthest from the wearable electronic device 401 with respect to the third axis direction 513 in the virtual first region 501 as the position of the second AR image 1420.

According to an embodiment, the position of the second AR image 1420 displayed in the virtual first region 501 may be farther from the wearable electronic device 401 with respect to the third axis direction 513 (e.g., the third axis direction 513 of FIG. 5A) than the position of the first AR image 1330.

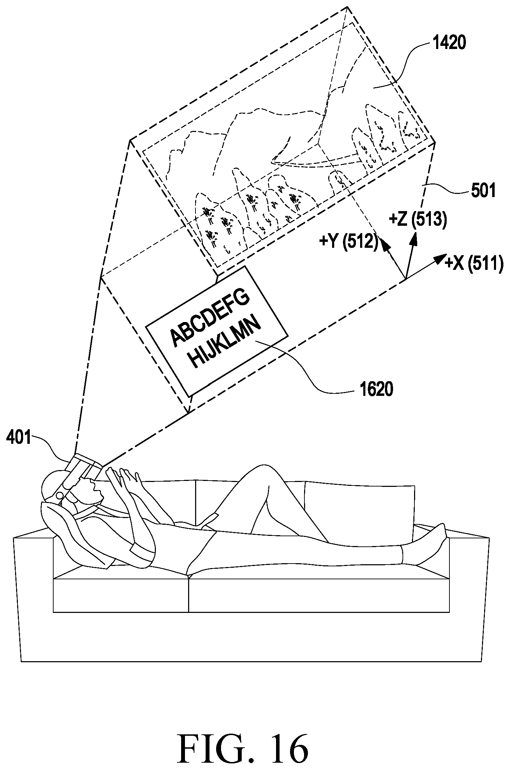

FIG. 16 is a diagram comparing a position and size of a first AR image when a first image is an image captured of a landscape with a position and size of the first AR image when the first image includes text, according to an embodiment.

Referring to FIG. 16, for convenience of description, AR images 1420 and 1620 are shown as being displayed simultaneously to describe their display positions in the virtual first region 501. However, it is described that only one of the AR images 1420 and 1620 is displayed in the virtual first region 501 (e.g., the virtual first region 501 of FIG. 5A).

According to an embodiment, the resolution of the first image corresponding to the first AR image 1420 and the resolution of the second image corresponding to the second AR image 1620 may be identical to each other.

According to an embodiment, based on identifying that the first image includes an image captured of a landscape (e.g., a tree, grass, a mountain, the sea, or a flower), the wearable electronic device 401 (e.g., the wearable electronic device 401 of FIG. 4) may determine a position farthest from the wearable electronic device 401 with respect to the third axis direction 513 (e.g., the third axis direction 513 of FIG. 5A) in the virtual first region 501 as the position of the first AR image 1420.

According to an embodiment, based on identifying that the second image includes text, the wearable electronic device 401 may determine the position of the second AR image 1620 in the virtual first region 501 such that the text is displayed in a specified size. For example, the specified size may include a font size set as a default in a UI of the wearable electronic device 401. For example, the specified size may be specified by the user or automatically specified by the processor 420 (e.g., the processor 420 of FIG. 4).

According to an embodiment, the position of the first AR image 1420 displayed in the virtual first region 501 may be farther from the wearable electronic device 401 with respect to the third axis direction 513 than the position of the second AR image 1620.

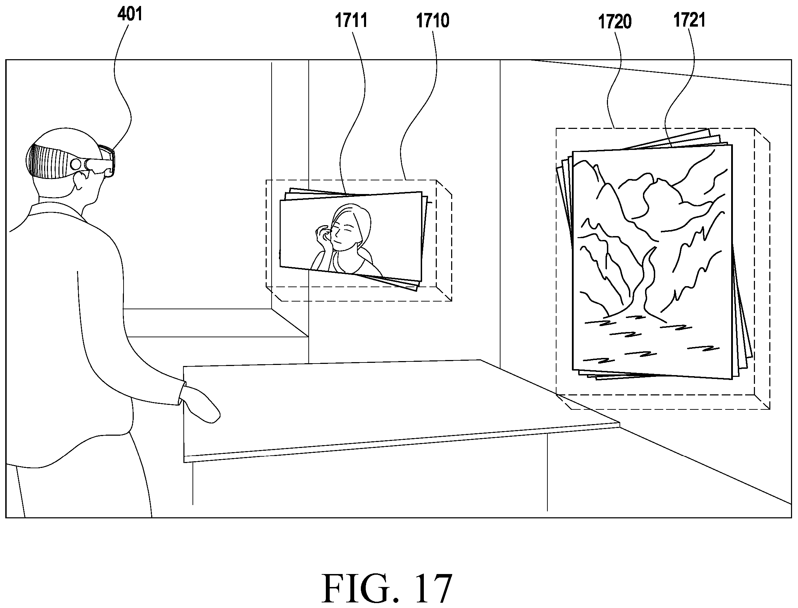

FIG. 17 is a diagram illustrating an operation of displaying a plurality of AR images corresponding to a plurality of images by a wearable electronic device according to an embodiment.

Referring to FIG. 17, according to an embodiment, the wearable electronic device 401 (e.g., the wearable electronic device 401 of FIG. 4) may determine a plurality of virtual regions 1710 and 1720 in which a plurality of AR images are to be displayed. According to an embodiment, each of the virtual regions 1710 and 1720 may include a region corresponding to the FOV of the user.

According to an embodiment, the wearable electronic device 401 may group AR images corresponding to a plurality of images based on their resolutions or objects included in the plurality of images and display them in a virtual region. According to an embodiment, the wearable electronic device 401 may group the AR images based on metadata included in the plurality of images and display them in a virtual region.

For example, the wearable electronic device 401 may display a plurality of first AR images corresponding to a plurality of first images having the same first resolution in a virtual region 1710. According to an embodiment, the wearable electronic device 401 may display an AR image 1711 corresponding to one of the first images at the very front and display the AR images corresponding to the remaining images behind the AR image 1710. The wearable electronic device 401 may determine sizes and positions of the plurality of first AR images in the virtual region 1710 based on the first resolution and display them in the virtual region 1710 based on the determined sizes and positions.

According to an embodiment, the wearable electronic device 401 may display a plurality of second AR images corresponding to a plurality of second images having the same second resolution in the virtual region 1720. According to an embodiment, the wearable electronic device 401 may display an AR image 1721 corresponding to one of the second images at the very front and display the AR images corresponding to the remaining images behind the AR image 1721. The wearable electronic device 401 may determine sizes and positions of the plurality of second AR images in the virtual region 1720 based on the second resolution and display them in the virtual region 1720 based on the determined sizes and positions.

According to an embodiment, based on identifying that the objects included in the plurality of first images contain the upper bodies of persons, the wearable electronic device 401 may display the first AR images corresponding to the plurality of first images in the virtual region 1710. In this case, the wearable electronic device 401 may determine the sizes and positions of the first AR images such that the faces of the persons are positioned at the eye height of the user and display them in the virtual region 1710 based on the determined sizes and positions.

According to an embodiment, based on identifying that the plurality of second images include landscape photographs, the wearable electronic device 401 may display the second AR images corresponding to the plurality of second images in the virtual region 1720. In this case, the wearable electronic device 401 may determine the sizes and positions of these second AR images in the virtual region 1720 at a specified distance from the wearable electronic device 401 based on the second axis direction 513 (e.g., the second axis direction 513 of FIG. 5A), and display the plurality of second AR images in the virtual region 1720 based on the determined sizes and positions. For example, the specified distance may be greater than the distances between the wearable electronic device 401 and the plurality of first AR images corresponding to the plurality of first images based on the second axis direction 513.

According to an embodiment, based on identifying that objects included in the plurality of first images are at the same distance from the wearable electronic device 401 with respect to the third axis direction 513 based on metadata of the plurality of first images, the wearable electronic device 401 may display the plurality of first AR images corresponding to the plurality of first images in the virtual region 1710.

According to an embodiment, based on identifying that objects included in the plurality of second images are at the same distance from the wearable electronic device 401 with respect to the third axis direction 513 based on metadata of the plurality of second images, the wearable electronic device 401 may display the plurality of second AR images corresponding to the plurality of second images in the virtual region 1720.

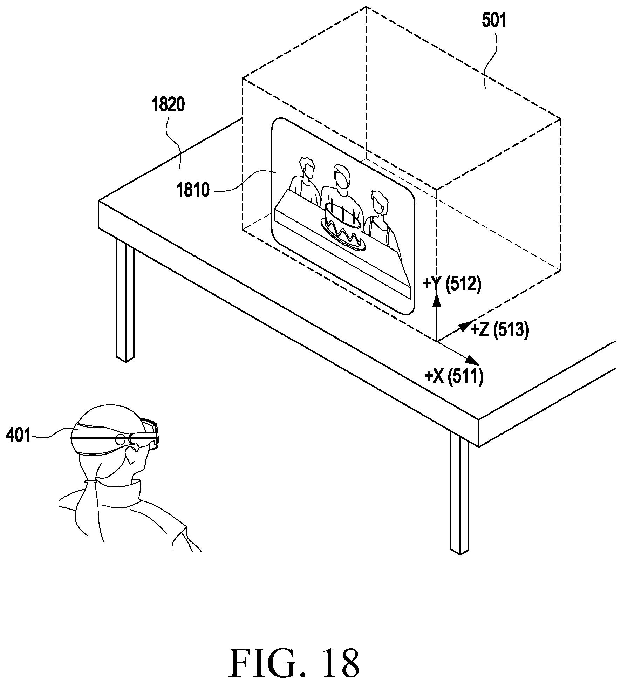

FIG. 18 is a diagram illustrating an operation of displaying a first AR image corresponding to a first image by analyzing an object in the first image by a wearable electronic device according to an embodiment.

Referring to FIG. 18, according to an embodiment, the wearable electronic device 401 (e.g., the wearable electronic device 401 of FIG. 4) may analyze a first image. According to an embodiment, the wearable electronic device 401 may identify at least one object included in the first image based on a result of analyzing the first image (e.g., a scene). According to an embodiment, the wearable electronic device 401 may also identify at least one object based on metadata which was obtained when the first image is captured. For example, the at least one object may include an item (e.g., a table).

According to an embodiment, the virtual first region 501 may be at least a partial region of the 3D space identified by a camera included in the wearable electronic device 401 or by the user's vision. According to an embodiment, the partial region of the 3D space identified by the camera or the user's vision may include a region determined based on the at least one object included in the first image.

According to an embodiment, when an object identical or similar to the at least one object included in the first image exists in a real world, the wearable electronic device 401 may determine the position of the object included in the real world, which is identical or similar to the at least one object included in the first image, as the position of the virtual first region 501.

According to an embodiment, the wearable electronic device 401 may display a first AR image corresponding to the first image in the virtual first region 501.

According to an embodiment, the wearable electronic device 401 may determine a size of the first AR image based on the size of the object included in the real world, which is identical or similar to the at least one object included in the first image.

The wearable electronic device 401 (e.g., the wearable electronic device 401 of FIG. 4) according to an embodiment may include the first sensor 430 (e.g., the first sensor 430 of FIG. 4), the second sensor 440 (e.g., the second sensor 440 of FIG. 4), the memory 410 (e.g., the memory 410 of FIG. 4), the display 460 (e.g., the display 460 of FIG. 4), and the processor 420 (e.g., the processor 420 of FIG. 4).

The memory according to an embodiment may store instructions that, when executed by the processor individually or collectively, cause the wearable electronic device to obtain, through the first sensor, a first sensing value indicating an angle at which the wearable electronic device is tilted.

The memory according to an embodiment may store instructions that, when executed by the processor individually or collectively, cause the wearable electronic device to identify, through the second sensor, a line of sight of a user wearing the wearable electronic device.

The memory according to an embodiment may store instructions that, when executed by the processor individually or collectively, cause the wearable electronic device to, based on the first sensing value and the line of sight, identify a virtual first region corresponding to a three-dimensional space to display a first image stored in the memory as a first AR image. The virtual first region may correspond to the user's FOV.

The memory according to an embodiment may store instructions that, when executed by the processor individually or collectively, cause the wearable electronic device to identify a resolution of the first image and at least one object included in the first image.

The memory according to an embodiment may store instructions that, when executed by the processor individually or collectively, cause the wearable electronic device to, based on the at least one object and the resolution, identify a position at which the first AR image is to be displayed and a size of the first AR image, in the virtual first region. The position may be identified based on a first position based on a first axis direction and a second axis direction perpendicular to the first axis direction in the virtual first region, and a second position based on a third axis direction perpendicular to the first axis direction and the second axis direction in the virtual first region, and the third axis direction may indicate a direction toward the virtual first region and away from the wearable electronic device.

The memory according to an embodiment may store instructions that, when executed by the processor individually or collectively, cause the wearable electronic device to display, through the display, the first AR image of the size at the position in the virtual first region.

The memory according to an embodiment may store instructions that, when executed by the processor individually or collectively, cause the wearable electronic device to, based on identifying that the resolution of the first image is a first resolution, identify a position corresponding to a first distance between the first AR image and the wearable electronic device based on the third axis direction as the second position.

The memory according to an embodiment may store instructions that, when executed by the processor individually or collectively, cause the wearable electronic device to, based on identifying that the resolution of the first image is a second resolution that is higher than the first resolution, identify a position corresponding to a second distance greater than the first distance between the first AR image and the wearable electronic device based on the third axis direction as the second position.

The memory according to an embodiment may store instructions that, when executed by the processor individually or collectively, cause the wearable electronic device to, based on identifying that the resolution of the first image is a first resolution, identify a position corresponding to a first distance between the first AR image and the wearable electronic device based on the third axis direction as the second position.

The memory according to an embodiment may store instructions that, when executed by the processor individually or collectively, cause the wearable electronic device to, based on identifying that the resolution of the first image is a second resolution that is higher than the first resolution, identify a position corresponding to a second distance greater than the first distance between the first AR image and the wearable electronic device based on the third axis direction as the second position.

The memory according to an embodiment may store instructions that, when executed by the processor individually or collectively, cause the wearable electronic device to, based on identifying that the resolution of the first image is a first resolution, identify a first size as the size.

The memory according to an embodiment may store instructions that, when executed by the processor individually or collectively, cause the wearable electronic device to, based on identifying that the resolution of the first image is a second resolution that is higher than the first resolution, identify a second size larger than the first size as the size.

The memory according to an embodiment may store instructions that, when executed by the processor individually or collectively, cause the wearable electronic device to, based on identifying that the first image includes a full-body image of a person, identify the position and the size of the first AR image which correspond to a height of the person included in metadata of the first image.

The memory according to an embodiment may store instructions that, when executed by the processor individually or collectively, cause the wearable electronic device to, based on identifying that the first image includes an image of an upper body of a person, identify the position and the size of the first AR image such that the person's face is positioned at an eye height of the user.

The memory according to an embodiment may store instructions that, when executed by the processor individually or collectively, cause the wearable electronic device to, based on identifying that the first image includes text, identify the position and the size of the first AR image such that the text is displayed in a specified size.

The memory according to an embodiment may store instructions that, when executed by the processor individually or collectively, cause the wearable electronic device to, based on identifying that the first image includes an image including a sky, identify the position and the size of the first AR image such that the sky is positioned at a higher position than the user's eyes.

The memory according to an embodiment may store instructions that, when executed by the processor individually or collectively, cause the wearable electronic device to, based on a distance based on the third axis direction between the wearable electronic device capturing the first image included in the metadata of the first image and the at least one object included in the first image, identify the second position of the first AR image.

The memory according to an embodiment may store instructions that, when executed by the processor individually or collectively, cause the wearable electronic device to, when the first image includes a person, identify a third position based on the third axis direction as the second position, and when the first image includes a landscape, identify a fourth position based on the third axis direction as the second position. The third position may be closer to the wearable electronic device than the fourth position with respect to the third axis direction.

The memory according to an embodiment may store instructions that, when executed by the processor individually or collectively, cause the wearable electronic device to, when the first image includes text, identify a third position based on the third axis direction as the second position, and when the first image includes a landscape, identify a fourth position based on the third axis direction as the second position. The third position may be closer to the wearable electronic device than the fourth position with respect to the third axis direction.

A method for operating a wearable electronic device according to an embodiment may include obtaining, through a first sensor of the wearable electronic device, a first sensing value indicating an angle at which the wearable electronic device is tilted.

The method for operating the wearable electronic device according to an embodiment may include identifying, through a second sensor of the wearable electronic device, a line of sight of a user wearing the wearable electronic device.

The method for operating the wearable electronic device according to an embodiment may include, based on the first sensing value and the line of sight, identifying a virtual first region corresponding to a three-dimensional space to display a first image stored in memory of the wearable electronic device as a first AR image. The first region may correspond to the user's FOV.

The method for operating the wearable electronic device according to an embodiment may include identifying a resolution of the first image and at least one object included in the first image.

The method for operating the wearable electronic device according to an embodiment may include, based on the at least one object and the resolution, identifying a position at which the first AR image corresponding to the first image is to be displayed and a size of the first AR image to be displayed at the position, in the virtual first region. The position may be identified based on a first position based on a first axis direction and a second axis direction perpendicular to the first axis direction in the virtual first region, and a second position based on a third axis direction perpendicular to the first axis direction and the second axis direction in the virtual first region, and the third axis direction may indicate a direction toward the virtual first region and away from the wearable electronic device.

The method for operating the wearable electronic device according to an embodiment may include displaying, through a display of the wearable electronic device, the first AR image of the size at the position in the virtual first region.

The method for operating the wearable electronic device according to an embodiment may include, based on identifying that the resolution of the first image is a first resolution, identifying a position corresponding to a first distance between the first AR image and the wearable electronic device based on the third axis direction as the second position.

The method for operating the wearable electronic device according to an embodiment may include, based on identifying that the resolution of the first image is a second resolution that is higher than the first resolution, identifying a position corresponding to a second distance greater than the first distance between the first AR image and the wearable electronic device based on the third axis direction as the second position.

The method for operating the wearable electronic device according to an embodiment may include, based on identifying that the resolution of the first image is a first resolution, identifying a first size as the size.

The method for operating the wearable electronic device according to an embodiment may include, based on identifying that the resolution of the first image is a second resolution that is higher than the first resolution, identifying a second size larger than the first size as the size.

The method for operating the wearable electronic device according to an embodiment may include identifying the position and the size of the first AR image which correspond to a height of the person included in metadata of the first image.

The method for operating the wearable electronic device according to an embodiment may include, based on identifying that the first image includes an image of an upper body of a person, identifying the position and the size of the first AR image such that the person's face is positioned at an eye height of the user.

The method for operating the wearable electronic device according to an embodiment may include, based on identifying that the first image includes text, identifying the position and the size of the first AR image such that the text is displayed in a specified size.

The method for operating the wearable electronic device according to an embodiment may include, based on identifying that the first image includes an image including a sky, identifying the position and the size of the first AR image such that the first image is positioned at a higher position than the user's eyes.

The method for operating the wearable electronic device according to an embodiment may include, based on a distance based on the third axis direction between the wearable electronic device capturing the first image included in the metadata of the first image and the at least one object included in the first image, identifying the second position of the first AR image.

The method for operating the wearable electronic device according to an embodiment may include, when the first image includes a person, identifying a third position based on the third axis direction as the second position, and when the first image includes a landscape, identifying a fourth position based on the third axis direction as the second position. The third position may be closer to the wearable electronic device than the fourth position with respect to the third axis direction.

The method for operating the wearable electronic device according to an embodiment may include, when the first image includes text, identifying a third position based on the third axis direction as the second position, and when the first image includes a landscape, identifying a fourth position based on the third axis direction as the second position. The third position may be closer to the wearable electronic device than the fourth position with respect to the third axis direction.

In a computer-readable storage medium storing instructions according to an embodiment, the instructions, when executed by a processor of a wearable electronic device, may cause the wearable electronic device to perform at least one operation, and the at least one operation may include obtaining, through a first sensor of the wearable electronic device, a first sensing value indicating an angle at which the wearable electronic device is tilted.

In the computer-readable storage medium storing instructions according to an embodiment, the instructions, when executed by the processor of the wearable electronic device, may cause the wearable electronic device to perform at least one operation, and the at least one operation may include identifying, through a second sensor of the wearable electronic device, a line of sight of a user wearing the wearable electronic device.

In the computer-readable storage medium storing instructions according to an embodiment, the instructions, when executed by the processor of the wearable electronic device, may cause the wearable electronic device to perform at least one operation, and the at least one operation may include, based on the first sensing value and the line of sight, identifying a virtual first region corresponding to a three-dimensional space to display a first image stored in memory of the wearable electronic device as a first AR image. The first region may correspond to the user's FOV.

In the computer-readable storage medium storing instructions according to an embodiment, the instructions, when executed by the processor of the wearable electronic device, may cause the wearable electronic device to perform at least one operation, and the at least one operation may include identifying a resolution of the first image and at least one object included in the first image.

In the computer-readable storage medium storing instructions according to an embodiment, the instructions, when executed by the processor of the wearable electronic device, may cause the wearable electronic device to perform at least one operation, and the at least one operation may include, based on the at least one object and the resolution, identifying a position at which the first AR image corresponding to the first image is to be displayed and a size of the first AR image to be displayed at the position, in the virtual first region. The position may be identified based on a first position based on a first axis direction and a second axis direction perpendicular to the first axis direction in the virtual first region, and a second position based on a third axis direction perpendicular to the first axis direction and the second axis direction in the virtual first region, and the third axis direction may indicate a direction toward the virtual first region and away from the wearable electronic device.

In the computer-readable storage medium storing instructions according to an embodiment, the instructions, when executed by the processor of the wearable electronic device, may cause the wearable electronic device to perform at least one operation, and the at least one operation may include displaying, through a display of the wearable electronic device, the first AR image of the size at the position in the virtual first region.

In the computer-readable storage medium storing instructions according to an embodiment, the instructions, when executed by the processor of the wearable electronic device, may cause the wearable electronic device to perform at least one operation, and the at least one operation may include, based on identifying that the resolution of the first image is a first resolution, identifying a position corresponding to a first distance between the first AR image and the wearable electronic device based on the third axis direction as the second position.

In the computer-readable storage medium storing instructions according to an embodiment, the instructions, when executed by the processor of the wearable electronic device, may cause the wearable electronic device to perform at least one operation, and the at least one operation may include, based on identifying that the resolution of the first image is a second resolution that is higher than the first resolution, identifying a position corresponding to a second distance greater than the first distance between the first AR image and the wearable electronic device based on the third axis direction as the second position.

In the computer-readable storage medium storing instructions according to an embodiment, the instructions, when executed by the processor of the wearable electronic device, may cause the wearable electronic device to perform at least one operation, and the at least one operation may include, based on identifying that the resolution of the first image is a first resolution, identifying a first size as the size.

In the computer-readable storage medium storing instructions according to an embodiment, the instructions, when executed by the processor of the wearable electronic device, may cause the wearable electronic device to perform at least one operation, and the at least one operation may include, based on identifying that the resolution of the first image is a second resolution that is higher than the first resolution, identifying a second size larger than the first size as the size.

In the computer-readable storage medium storing instructions according to an embodiment, the instructions, when executed by the processor of the wearable electronic device, may cause the wearable electronic device to perform at least one operation, and the at least one operation may include, based on identifying that the first image includes a full-body image of a person, identifying the position and the size of the first AR image which correspond to a height of the person included in metadata of the first image.

In the computer-readable storage medium storing instructions according to an embodiment, the instructions, when executed by the processor of the wearable electronic device, may cause the wearable electronic device to perform at least one operation, and the at least one operation may include, based on identifying that the first image includes an image of an upper body of a person, identifying the position and the size of the first AR image such that the person's face is positioned at an eye height of the user.

In the computer-readable storage medium storing instructions according to an embodiment, the instructions, when executed by the processor of the wearable electronic device, may cause the wearable electronic device to perform at least one operation, and the at least one operation may include, based on identifying that the first image includes text, identifying the position and the size of the first AR image such that the text is displayed in a specified size.

In the computer-readable storage medium storing instructions according to an embodiment, the instructions, when executed by the processor of the wearable electronic device, may cause the wearable electronic device to perform at least one operation, and the at least one operation may include, based on identifying that the first image includes an image including a sky, identifying the position and the size of the first AR image such that the sky is positioned at a higher position than the user's eyes.

In the computer-readable storage medium storing instructions according to an embodiment, the instructions, when executed by the processor of the wearable electronic device, may cause the wearable electronic device to perform at least one operation, and the at least one operation may include, based on a distance based on the third axis direction between the wearable electronic device capturing the first image included in the metadata of the first image and the at least one object included in the first image, identifying the second position of the first AR image.

In the computer-readable storage medium storing instructions according to an embodiment, the instructions, when executed by the processor of the wearable electronic device, may cause the wearable electronic device to perform at least one operation, and the at least one operation may include, when the first image includes a person, identifying a third position based on the third axis direction as the second position, and when the first image includes a landscape, identifying a fourth position based on the third axis direction as the second position. The third position may be closer to the wearable electronic device than the fourth position with respect to the third axis direction.

In the computer-readable storage medium storing instructions according to an embodiment, the instructions, when executed by the processor of the wearable electronic device, may cause the wearable electronic device to perform at least one operation, and the at least one operation may include, when the first image includes text, identifying a third position based on the third axis direction as the second position, and when the first image includes a landscape, identifying a fourth position based on the third axis direction as the second position. The third position may be closer to the wearable electronic device than the fourth position with respect to the third axis direction.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C", may include any one of, or all possible combinations of the items enumerated together in a corresponding one of the phrases. As used herein, such terms as "1^{st}" and "2^{nd}", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, logic, logic block, part, or circuitry. A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101, 200, 300, or 401). For example, a processor (e.g., the processor 120 or 420) of the machine (e.g., the electronic device 101, 200, 300, or 401) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{TM}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A wearable electronic device (401) comprising:
a first sensor (430);
a second sensor (440);
memory (410);
a display (460); and
a processor (420),
wherein the memory stores instructions that, when executed by the processor individually or collectively, cause the wearable electronic device to:
obtain, through the first sensor, a first sensing value indicating an angle at which the wearable electronic device is tilted,
identify, through the second sensor, a line of sight of a user wearing the wearable electronic device,
based on the first sensing value and the line of sight, identify a virtual first region corresponding to a three-dimensional space to display a first image stored in the memory as a first augmented reality image, wherein the virtual first region corresponds to the user's field of view,
identify a resolution of the first image and at least one object included in the first image,
based on the at least one object and the resolution, identify a position at which the first augmented reality image is to be displayed and a size of the first augmented reality image, in the virtual first region, wherein the position is identified based on a first position based on a first axis direction and a second axis direction perpendicular to the first axis direction in the virtual first region, and a second position based on a third axis direction perpendicular to the first axis direction and the second axis direction in the virtual first region, and wherein the third axis direction indicates a direction toward the virtual first region and away from the wearable electronic device, and
display, through the display, the first augmented reality image of the size at the position in the virtual first region.

2. The wearable electronic device of claim 1, wherein the memory stores instructions that, when executed by the processor individually or collectively, cause the wearable electronic device to:
based on identifying that the resolution of the first image is a first resolution, identify a position corresponding to a first distance between the first augmented reality image and the wearable electronic device based on the third axis direction as the second position, and
based on identifying that the resolution of the first image is a second resolution that is higher than the first resolution, identify a position corresponding to a second distance greater than the first distance between the first augmented reality image and the wearable electronic device based on the third axis direction as the second position.

3. The wearable electronic device of claim 1 or 2, wherein the memory stores instructions that, when executed by the processor individually or collectively, cause the wearable electronic device to:
based on identifying that the resolution of the first image is a first resolution, identify a first size as the size, and
based on identifying that the resolution of the first image is a second resolution that is higher than the first resolution, identify a second size larger than the first size as the size.

4. The wearable electronic device of any one of claims 1 to 3, wherein the memory stores instructions that, when executed by the processor individually or collectively, cause the wearable electronic device to, based on identifying that the first image includes a full-body image of a person, identify the position and the size of the first augmented reality image which correspond to a height of the person included in metadata of the first image.

5. The wearable electronic device of any one of claims 1 to 4, wherein the memory stores instructions that, when executed by the processor individually or collectively, cause the wearable electronic device to, based on identifying that the first image includes an image of an upper body of a person, identify the position and the size of the first augmented reality image such that the person's face is positioned at an eye height of the user.

6. The wearable electronic device of any one of claims 1 to 5, wherein the memory stores instructions that, when executed by the processor individually or collectively, cause the wearable electronic device to, based on identifying that the first image includes text, identify the position and the size of the first augmented reality image such that the text is displayed in a specified size.

7. The wearable electronic device of any one of claims 1 to 6, wherein the memory stores instructions that, when executed by the processor individually or collectively, cause the wearable electronic device to, based on identifying that the first image includes an image including a sky, identify the position and the size of the first augmented reality image such that the sky is positioned at a higher position than the user's eyes.

8. The wearable electronic device of any one of claims 1 to 7, wherein the memory stores instructions that, when executed by the processor individually or collectively, cause the wearable electronic device to, based on information about a distance based on the third axis direction between the wearable electronic device capturing the first image included in the metadata of the first image and the at least one object included in the first image, identify the second position of the first augmented reality image.

9. The wearable electronic device of any one of claims 1 to 8, wherein the memory stores instructions that, when executed by the processor individually or collectively, cause the wearable electronic device to:
when the first image includes a person, identify a third position based on the third axis direction as the second position, and
when the first image includes a landscape, identify a fourth position based on the third axis direction as the second position, and
wherein the third position is closer to the wearable electronic device than the fourth position with respect to the third axis direction.

10. The wearable electronic device of any one of claims 1 to 9, wherein the memory stores instructions that, when executed by the processor individually or collectively, cause the wearable electronic device to:
when the first image includes text, identify a third position based on the third axis direction as the second position, and
when the first image includes a landscape, identify a fourth position based on the third axis direction as the second position, and
wherein the third position is closer to the wearable electronic device than the fourth position with respect to the third axis direction.

11. A method for operating a wearable electronic device (401), comprising:
obtaining, through a first sensor (430) of the wearable electronic device, a first sensing value indicating an angle at which the wearable electronic device is tilted;
identifying, through a second sensor (440) of the wearable electronic device, a line of sight of a user wearing the wearable electronic device;
based on the first sensing value and the line of sight, identifying a virtual first region corresponding to a three-dimensional space to display a first image stored in memory (410) of the wearable electronic device as a first augmented reality image, wherein the first region corresponds to the user's field of view;
identifying a resolution of the first image and at least one object included in the first image;
based on the at least one object and the resolution, identifying a position at which the first augmented reality image corresponding to the first image is to be displayed and a size of the first augmented reality image to be displayed at the position, in the virtual first region, wherein the position is identified based on a first position based on a first axis direction and a second axis direction perpendicular to the first axis direction in the virtual first region, and a second position based on a third axis direction perpendicular to the first axis direction and the second axis direction in the virtual first region, and wherein the third axis direction indicates a direction toward the virtual first region and away from the wearable electronic device; and
displaying, through a display (460) of the wearable electronic device, the first augmented reality image of the size at the position in the virtual first region.

12. The method of claim 11, further comprising:
based on identifying that the resolution of the first image is a first resolution, identifying a position corresponding to a first distance between the first augmented reality image and the wearable electronic device based on the third axis direction as the second position; and
based on identifying that the resolution of the first image is a second resolution that is higher than the first resolution, identifying a position corresponding to a second distance greater than the first distance between the first augmented reality image and the wearable electronic device based on the third axis direction as the second position.

13. The method of claim 11 or 12, further comprising:
based on identifying that the first image includes a full-body image of a person, identifying the position and the size of the first augmented reality image which correspond to a height of the person included in metadata of the first image;
based on identifying that the first image includes an image of an upper body of a person, identifying the position and the size of the first augmented reality image such that the person's face is positioned at an eye height of the user;
based on identifying that the first image includes text, identifying the position and the size of the first augmented reality image such that the text is displayed in a specified size; and/or
based on identifying that the first image includes an image including a sky, identifying the position and the size of the first augmented reality image such that the sky is positioned at a higher position than the user's eyes.

14. The method of any one of claims 11 to 13, further comprising, based on information about a distance based on the third axis direction between the wearable electronic device capturing the first image included in the metadata of the first image and the at least one object included in the first image, identifying the second position of the first augmented reality image.

15. A computer-readable storage medium storing instructions that, when executed by a processor (420) of a wearable electronic device (401), cause the wearable electronic device to perform at least one operation,
wherein the at least one operation includes:
obtaining, through a first sensor (430) of the wearable electronic device, a first sensing value indicating an angle at which the wearable electronic device is tilted;
identifying, through a second sensor (440) of the wearable electronic device, a line of sight of a user wearing the wearable electronic device;
based on the first sensing value and the line of sight, identifying a virtual first region corresponding to a three-dimensional space to display a first image stored in memory of the wearable electronic device as a first augmented reality image, wherein the first region corresponds to the user's field of view;
identifying a resolution of the first image and at least one object included in the first image;
based on the at least one object and the resolution, identifying a position at which the first augmented reality image corresponding to the first image is to be displayed and a size of the first augmented reality image to be displayed at the position, in the virtual first region, wherein the position is identified based on a first position based on a first axis direction and a second axis direction perpendicular to the first axis direction in the virtual first region, and a second position based on a third axis direction perpendicular to the first axis direction and the second axis direction in the virtual first region, and wherein the third axis direction indicates a direction toward the virtual first region and away from the wearable electronic device; and
displaying, through a display (460) of the wearable electronic device, the first augmented reality image of the size at the position in the virtual first region.
